# EUROPÄISCHE PATENTSCHRIFT

(11) **EP 0 543 258 B1**
(45) Veröffentlichungstag und Bekanntmachung des Hinweises auf die Patenterteilung: **09.12.1998**
(21) Anmeldenummer: 92119225.8
(22) Anmeldetag: 09.11.1992
(51) Int. Cl.: A61C 13/00, A61C 5/10

(54) **Verfahren und Einrichtung zur Herstellung von Zahnersatzteilen**
Method and device for the production of dental prosthesis
Procédé et dispositif pour la fabrication d'une prothèse dentaire

(30) Priorität: 17.11.1991 CH 3357/91
(43) Veröffentlichungstag der Anmeldung: 26.05.1993
(73) Patentinhaber: LICONIC AG, 9485 Nendeln (LI)
(72) Erfinder: Rheinberger, Volker M., Dr., FL-9490 Vaduz (LI); Unterbrink, Gary, Dr., A-6804 Feldkirch (AT); Malin, Cosmas, FL-9493 Mauren (LI); Sawatzki, Harry L., FL-9494 Schaan (LI)
(74) Vertreter: OK pat AG

(56) Entgegenhaltungen:
- EP-A- 0 033 492
- EP-A- 0 054 785
- EP-A- 0 311 214
- EP-A- 0 455 855
- WO-A-92/08420
- FR-A- 2 290 275
- FR-A- 2 403 167

## Beschreibung

Die Erfindung betrifft ein Verfahren nach dem Oberbegriff des Patentanspruchs **1** und eine Einrichtung zur Durchführung dieses Verfahrens nach dem Oberbegriff des Patentanspruchs **7.**

Die meisten Zahnfüllungen werden heute als Amalgamfüllungen ausgeführt. Die Gründe hierfür liegen neben deren Langlebigkeit in den niedrigen Kosten und der Herstellbarkeit innerhalb einer Sitzung eines Patienten beim Zahnarzt. Die Nachteile der Amalgamfüllungen sind hauptsächlich in deren niedrigem ästhetischem Wert und in den darin verwendeten Materialien zu sehen, die heute gesundheitlich nicht unumstritten sind.

Die bekannten Alternativen sind Goldfüllungen, Composite und Inlays und Onlay. Composite eignen sich dabei nur für recht kleine Füllungen. Für grössere Füllungen bieten sich Goldfüllungen oder Inlays an. Da Metallfüllungen teuer sind und sich farblich nicht dem Zahnmaterial anpassen lassen, schwindet deren Bedeutung zugunsten der Inlays und Onlays. Diese Füllkörper werden aus widerstandsfähigen Materialien (Kunststoff, Keramik) hergestellt deren Farbe sich an die des Zahnes anpassen lässt. Sie werden über ein im Mund des Patienten hergestelltes Modell gefertigt. Die klassische Herstellungsmethode sogenannter Zahntechniker-Inlays beziehungsweise -Onlays aus Keramik geht den Weg über das Negativ-Modell. In mehreren Brandschritten wird das eigentliche Inlay/Onlay mit Hilfe dieses Negativmodells hergestellt. Mit zunehmender Anzahl Brandschritte kann die Passgenauigkeit des Zahntechniker-Inlays und/oder -Onlays erhöht werden. Diese Methode ist mit grossem Aufwand und insbesondere mit der Notwendigkeit von zwei Sitzungen des Patienten beim Zahnarzt verbunden. Es wurden daher Verfahren entwickelt, die das Herstellen einer Inlay-/Onlay-Füllung innerhalb einer Sitzung ermöglichen sollen. Allen diesen Verfahren ist gemeinsam, dass mit einem beweglichen Bearbeitungswerkzeug das eigentliche Inlay/Onlay direkt aus einem Rohling durch Fräsen bzw. Schleifen herausgearbeitet wird.

Bei einem solchen Verfahren gemäss der **EP-B-0 182 098** werden die Informationen für die Steuerung des Bearbeitungswerkzeugs durch Abbilden des präparierten Zahns auf einem Bildschirm, sowie durch manuelle Vorgabe der Schnittlinie am Bildschirm errechnet. Nach der Datenaufnahme formt das Bearbeitungswerkzeug mit den errechneten Daten das Inlay/Onlay in mehrachsig kombinierten Bewegungen. Mit diesem Verfahren lassen sich Inlayfüllungen in relativ kurzer Zeit herstellen. Allerdings ist die erreichbare Passgenauigkeit aus mehreren prinzipiellen Gründen ungenügend. Einmal ist die optische Ortsauflösung und die Abbildungseigenschaften der Bildaufnahme durch die gezwungenermassen kleine Bauform nicht in der benötigten Qualität herstellbar. Weiter treten Fehler beim Berechnen der Verläufe der Seitenwände der Zahnpräparation durch approximatisches Verbinden der manuell vorgegebenen Koordinaten des Präparationsverlaufes auf. Eine zusätzliche Fehlerquelle ist die manuelle Schnittlinienvorgabe selbst, die dem Operator grossen Spielraum zumisst. Wegen der optischen Ausmessung der Präparation unterliegt ferner die Gestaltung der Kavitätenpräparation grossen Einschränkungen was bedeutet, dass unnötig gesundes Zahnmaterial bei der Präparation entfernt werden muss und, dass spezielle Präparationsrichtlinien erlernt bzw. dem Zahnarzt auferlegt werden. Besonders nachteilig hat sich bei dieser Methode die Tatsache erwiesen, dass gerade an den nichtzugänglichen Stellen besonders grosse Fehler auftreten. Die Methode erlaubt auch kein direktes Herstellen der Kaufläche. Schliesslich sind Geräte die auf dieser Methode basieren aufwendig herstellbar und sehr teuer.

Mittels eines anderen, in der **EP-A- 0 402 720** beschriebenen Verfahrens wird, wie beim Zahntechniker-Inlay/-Onlay, ein Modell im Mund des Patienten hergestellt. Das Modell wird in eine bewegliche Halterung eingespannt und mit einem ebenfalls beweglichen Tastkopf solange manuell abgefahren, bis jeder Punkt der Oberfläche berührt wurde. Mit dem Tastkopf ist das Bearbeitungswerkzeug derart mechanisch verbunden, dass es den Bewegungen des Tastkopfes folgt. Zur Visualisierung der berührten Orte wird vor dem Abtastvorgang ein auf Berührung ansprechender Farbstoff auf das Modell gegeben. Mit diesem Verfahren lassen sich bei Verwendung entsprechend feiner Bearbeitungswerkzeuge theoretisch passgenaue Inlays/onlays herstellen. In der Praxis unterliegt diese Methode vielen Nachteilen. Beim manuellen Abtasten muss gleichzeitig der Fräser durch das Material des Substratkörpers geführt werden.

Durch den damit verbundenen Kraftaufwand geht das notwendige Gefühl für präzises Abtasten des Modells verloren. Das Modell muss für den Abtastvorgang relativ labil zwischen Spitzen aufgenommen werden. Zusätzlich zu den durch diese Art der Aufnahme hervorgerufenen Verformungen, addieren sich Fehler die durch den unzureichend kontrollierbaren Anpressdruck beim Abtasten in den Spitzen, den Verbindungen zwischen Spitzen und Modell und dem Modell selbst hervorgerufen werden. Besonders beim Abtragen von grösseren Materialmengen werden dadurch feine Erhöhungen im Oberflächenrelief verschmiert. Ein Verschieben des Modells in der Spitzenhalterung ist leicht möglich, wenn das Proinlay nicht sorgfältig im Halter montiert wurde oder, wenn dessen Form keine ausreichende Montage im Halter zulässt.

Um bei Verwendung eines spitzen Werkzeuges die Fehler durch elastische Verformung klein halten zu können, muss das Modell aus hartem Material gefertigt sein. Dies erschwert aber die Montage des Modells in der Maschine. Die gravierendsten Nachteile aus der Verwendung des harten Füllmaterials sind jedoch die Probleme, die bei der Entnahme des Modells aus dem Zahn entstehen können. Die Entnahme gestaltet sich wegen der guten Passgenauigkeit beispielsweise des Proinlays im Zahn als schwierig. Sind bei der Präparation Unterschnitte entstanden ist es gar unmöglich das Proinlay ganz aus der Präparation zu entfernen ohne den Zahn nachhaltig zu beschädigen. Der Zahn muss unter erschwerten Bedingungen neu präpariert werden.

Nachteilig am Gerät, das auf dieser Methode basiert, ist die grosse Anzahl von Freiheitsgraden des Abtastkopfs bzw. des Bearbeitungswerkzeuges die für eine einfache Bedienbarkeit erforderlich ist. Dies bedeutet grossen mechanischen Aufwand bei gleichzeitig hohen Genauigkeitsanforderungen. Ferner können Werkzeugtoleranzen in einem solchen Gerät wegen der gegenseitigen Beeinflussung der verschiedenen Freiheitsgrade nicht durch einfache Justagen kompensiert werden. Dies zieht wiederum Ungenauigkeiten durch den Werkzeugwechsel während eines Bearbeitungsganges nach sich.

Entfernen des Proinlays aus dem Zahn, Touchiermethode, Montage des Modells sowie der Abtastvorgang selbst, stellen bei dieser Methode hohe Geschicklichkeitanforderungen an den Operator. Die Resultate sind mit grossen Qualitätsschwankungen und oft mit grossem Zeitaufwand verbunden.

Ein weiteres, dem vorstehend beschriebenen ähnliches Verfahren, ist mit der **EP-B- 0 267 227** bekannt geworden. Der Abtastvorgang wird hier wie bei einer Schablonenfräsmaschine automatisch durchgeführt. Zu diesem Zweck wird ein Hydraulikventil bei Kontakt mit der Oberfläche geschaltet und steuert dabei einen Antrieb, der das Hydraulikventil und das Bearbeitungswerkzeug entsprechend dem Oberflächenverlauf bewegt. Diese Anordnung ist für die notwendigen Genauigkeitsanforderungen nicht geeignet und lässt keinen sinnvollen Einsatz im Zahnpraxisbereich zu. Ungenauigkeiten entstehen in der Betätigung des Hydraulikventils, denn wegen der Haftreibung der bewegbaren Spitze ist der Abtastvorgang mit unzureichend grossem Kraftaufwand verbunden. Zur Elimination der Haftreibung wird vorgeschlagen die bewegbare Spitze in Rotation zu versetzen. Dies ist mit den notwendigen Laufanforderungen technisch unmöglich und würde den notwendigen Kraftaufwand auf die bewegbare Spitze nur unwesentlich verringern, treten doch bei der rotierenden Bewegung der abzutastenden Oberfläche vor allem Kräfte auf, die tangential auf die Spitze wirken und somit Reibung an den Wänden der Führungsbohrung der bewegbaren Spitze verursachen. Eine rotierende Spitze kann ferner leicht das Original beschädigen. Schliesslich kann in einem Hydraulikventil unter den in Hydrauliksystemen auftretenden Drücken nur durch einen Presssitz oder durch spezielle Dichtvorrichtungen die Hydraulikflüssigkeit am Austreten gehindert werden. Beides ist mit Reibung und somit erhöhtem Kraftaufwand beim Bewegen der Spitze verbunden.

Weiterhin ist der Schaltvorgang bei einem Hydraulikventil dieser Art ist mit einer relativ grossen Hysterese verbunden. Das Hydraulikventil weist ferner ein stark progressives Schaltverhalten auf und die benötigten Kräfte für das Bewegen des Bearbeitungswerkzeuges sind gering. Dies führt zu einer starken Schwingneigung des Regelkreises, die nur durch entsprechende Dämpfung und damit mit Erhöhung der Betätigungskraft beherrscht werden kann. Ausserdem führt die Hysterese selbst zu weiteren Ungenauigkeiten. Schliesslich ist das beschriebene System durch die Verwendung eines Hydrauliksystems sehr aufwendig und teuer.

Die synchrone Rotation von Original und Kopie kann durch die Verwendung eines Zahnradgetriebes nicht laufruhig und dauerhaft präzise erreicht werden. Fehler durch Spiel oder rauhen Lauf der Zahnräder addieren sich zu den Fehlern im Hydraulikventil bzw. Hydrauliksystem.

Der für die Funktion notwendige Winkel zwischen Spitze bzw. Bearbeitungswerkzeug und Rotationsachse von Original bzw. Kopie verlangt ein spitzes Bearbeitungswerkzeug mit geringem Umfang. Im Rotationszentrum des Bearbeitungswerkzeuges ist die Geschwindigkeit Null. Bei den hohen Laufgeschwindigkeiten, die für Bearbeitungswerkzeuge dieser Art erforderlich sind, reicht die Lebensdauer eines Bearbeitungswerkzeuges in dieser Anordnung nicht für die Herstellung eines einzigen Inlays aus beispielsweise Keramik. Insbesondere durch das Fehlen einer Kühl- bzw. Schmiervorrichtung für das Werkzeug können keine harten Materialien bearbeitet werden. Ebenso können keine grossen Materialmengen abgetragen werden.

Obiger Winkel schränkt ferner die Brauchbarkeit dieser Anordnung insbesondere für die Herstellung von Inlays ein. So bleibt beispielsweise eine Seitenwand eines Inlays oder die steilen Wände einer Kastenpräparation für Spitze und Bearbeitungswerkzeug unerreichbar.

Bei der in der zuletzt genannten Druckschrift beschriebenen Anordnung kann der Zahnersatzteil je nach Bedarf mit einem oder mehreren verschiedenartig geformten Werkzeugen bearbeitet werden. Dadurch soll versucht werden, eine optimale Formgebung des Zahnersatzteils zu erhalten, und zwar - im Gegensatz zur weiter oben erwähnten EP-A-0 402 720 - zahlreiche Freiheitsgrade der Fühlervorrichtung und der Werkzeugvorrichtung. Da aber die Fühlerspitze bei einem Werkzeugwechsel unverändert bleibt, werden im allgemeinen das Bearbeitungswerkzeug und die Fühlerspitze unterschied liche Formen aufweisen. Unterschiedliche Formen von Bearbeitungswerkzeug und Fühlerspitze reduziert die Kopiergenauigkeit besonders bei Formkörpern mit ausgeprägtem Oberflächenrelief wie das eines Inlays. Die hohe Rotationsgeschwindigkeit des Formkörpers während der Bearbeitung (ca. 1000 U/Min), lässt in der Praxis wegen der endlichen Beschleunigung der Abtast- bzw. Bearbeitungsnachführvorrichtung die Herstellung von Strukturen mit ausgeprägtem Relief nicht zu. Die maximal erreichbare Beschleunigung der Abtast- bzw. Bearbeitungsnachführvorrichtung ist besonders durch die Massenträgheit des Fühlers auf sehr niedrige Werte limitiert.

Der Erfindung liegt die Aufgabe zugrunde, ein Verfahren der eingangs genannten Art und eine Einrichtung zur Durchführung des Verfahrens der eingangs genannten Art vorzuschlagen, mit welchen während einer Sitzung ein hochpräzises Zahnersatzteil hergestellt werden kann. Ferner soll durch die Erfindung eine Vorrichtung zur Durchführung des Verfahrens geschaffen werden, welche es ermöglicht, den Modellkörper präzis abzutasten und den Zahnersatzteil durch eine multidirektionale Bearbeitung präzis herzustellen.

Diese Aufgaben werden durch die kennzeichnenden Merkmale der Patentansprüche **1** bzw. **7** gelöst. Vorteilhafte Weiterbildungen sind durch die jeweiligen abhängigen Patentansprüche definiert.

Die grundlegende Idee der Erfindung besteht darin, sowohl den Abtastvorgang wie auch den Bearbeitungsvorgang aufzuteilen in zwei Vorgänge, nämlich in einen ersten Vorgang, während welchem - in herkömmlicherweise - eine Abtastung mittels einer Sensoreinheit und eine dadurch gesteuerte Bearbeitung mittels einer Werkzeugeinheit erfolgen. Erfindungsgemäss ist diese Abtastung eine Grob-Abtastung und die Werkzeugeinheit führt eine Grob-Bearbeitung durch. Anschliessend finden in einem zweiten Vorgang eine weitere Abtastung mittels einer weiteren, reibungsarmen und hochpräzisen, Sensoreinheit und eine dadurch gesteuerte weitere Bearbeitung mittels einer weiteren Werkzeugeinheit statt, wobei es sich um eine Fein-Abtastung und eine Fein-Bearbeitung handelt. Es wird ausdrücklich darauf hingewiesen, dass es sich bei der zweiten Werkzeugeinheit für die Fein-Bearbeitung nicht darum handelt, dass ein zweites Werkzeug zum Einsatz gelangt, das in derselben Einrichtung fixiert und gleich angetrieben wird ist wie das Werkzeug der ersten Werkzeugeinheit, sondern dass es sich - wie die Bezeichnung ausdrückt - um zwei verschiedene Werkzeugeinheiten handelt, welche zusammen die Bearbeitungswerkzeugeinrichtung bilden, mit der aus dem Rohling in Form eines Substratkörpers der fertige Zahnersatzteil mechanisch geformt wird. Die neue Anordnung erlaubt somit eine multidirektionale und damit präzise Abtastung des Modellkörpers und eine ebensolche Bearbeitung des Substratkörpers, ohne dass dazu eine Einrichtung mit einer Vielzahl von Freiheitsgraden verwendet oder mit Werkzeugen gearbeitet werden muss, deren Formen sich von denjenigen der Sensoreinheiten unterscheiden.

Mit der Erfindung, die am Beispiel eines Inlays (analog können Onlays hergestellt werden) beschrieben wird, werden die nachstehend aufgeführten weiteren Vorteile erzielt:
- Die Inlays können ähnlich wie die Amalgamfüllungen preisgünstig in nur einer Sitzung hergestellt werden, bestehen aus unbedenklichen Materialien, sind ästhetisch hochwertig und langlebig.
- Mit diesem Verfahren und der entsprechenden Vorrichtung können Passgenauigkeiten von einigen Mikrometern und Abtastkräfte von wenigen mN (kleiner 30 pond) erreicht werden.
- Durch die erzielbare hohe Passgenauigkeit liegt die Spaltbreite zwischen Zahn und lnlay unterhalb der kritischen Grösse für die Bildung von Karies.
- Das Proinlay kann dem Zahn entnommen werden, ohne dass die Gefahr besteht, dass dieser dabei beschädigt wird oder nachträglich behandelt werden muss.
- Da der Abtastdruck beim Kopiervorgang sehr gering und konstant ist -der mittlere Abtastdruck beträgt beispielsweise 5 pond-, verursacht die Restelastizität des weichen Proinlays nur nicht relevante, geringe Toleranzen.
- Wegen des geringen Abtastdruckes braucht der Haltestift des Proinlays nur angeklebt werden.
- Im weichen Zustand des Füllmaterials kann die Kaufläche im Proinlay modelliert werden.
- Das Inlay kann so genau gefertigt werden, dass beim Einsetzen keine oder nur unwesentliche Korrekturarbeiten erforderlich sind.
- Da ein Zahnarzt das Proinlay mit bekannten Techniken herstellen kann, wird die Ausbildung für den gesamten Herstellungsprozess auf ein Minimum reduziert.
- Da Sensorkopf und Bearbeitungswerkzeug exakt gleiche Formen aufweisen, formt das Bearbeitungswerkzeug den gleichen Oberflächenverlauf in den Substratkörper wie der des Proinlays.
- Durch die Verwendung zweier verschiedener Werkzeuge in Kombination können beachtliche Materialmengen aus dem Rohling entfernt werden und trotzdem feinste Erhebungen und/oder Absenkungen von wenigen Mikrometern bei der Herstellung des Inlays berücksichtigt werden, wobei durch die Teilung in Grob- und Fein-Bearbeitung die Standzeit der Werkzeuge einerseits und die "Dauergenauigkeit" andererseits erheblich gesteigert werden. Ja, ohne die Teilung in zwei Bearbeitungszyklen bzw. bei Verwendung von Werkzeugen zur ausschliesslichen Feinbearbeitung, wäre die Standzeit der Bearbeitungswerkzeuge bei Verwendung harter Substratmaterialien, wie beispielsweise Keramik, so gering, dass ein **wirtschaftliches** und **praxisgerechtes** Arbeiten undenkbar wäre.
- Die vorgeschlagene Rotations-Synchronisationsvorrichtung weist absolute Spielfreiheit, exakt zentrischen Rundlauf sowie grosse Steifigkeit und Verschleissfestigkeit auf, so dass praktisch keine durch Rundlauf- oder Synchronisationsabweichungen verursachte Kopierfehler entstehen können.

Im folgenden wird die Erfindung anhand mehrerer in den Zeichnungen dargestellter Ausführungsbeispiele näher erläutert. Es zeigen:
- **Fig. 1**: eine perspektivische Darstellung der erfindungsgemässen Einrichtung,
- **Fig. 2a**: eine perspektivische Darstellung eines Sensors der Einrichtung gemäss **Fig. 1** in einer ersten Ausführungsform,
- **Fig. 2b**: eine Seitenansicht eines Sensors der Einrichtung gemäss **Fig. 1** in einer zweiten Ausführungsform,
- **Fig. 2c**: eine Draufsicht eines Sensors der Einrichtung gemäss **Fig. 1** in einer weiteren Ausführungsform,
- **Fig. 2d**: eine Seitenansicht eines weiteren Ausführungsbeispiels des Sensors aus **Fig. 2a,**
- **Fig. 2e**: eine Draufsicht des Ausführungsbeispiels aus **Fig. 2d**
- **Fig. 2f**: ein Ausführungsbeispiel mit einem speziellen Sensor aus **Fig. 2a**
- **Fig. 3a**: eine perspektivische Darstellung der wesentlichsten Teile einer Rotations-Synchronisationsvorrichtung der Einrichtung gemäss **Fig. 1** in einer ersten Ausführungsform,
- **Fig. 3b**: eine perspektivische Darstellung der wesentlichsten Teile der Rotations-Synchronisationsvorrichtung in einer zweiten Ausführungsform,
- **Fig. 3c**: eine schematische Darstellung einer bestimmten Stellung der Rotations-Synchronisationsvorrichtung,
- **Fig. 3d**: ein Ausführungsbeispiel einer Bearbeitungs-Vorrichtungs-Halterung,
- **Fig. 3e**: ein Ausführungsbeispiel einer Bearbeitungs-Vorrichtungs-Halterung der Feinbearbeitung aus **Fig. 3d,**
- **Fig. 4a**: ein Blockschema einer elektronischen Steuerschaltung der Einrichtung gemäss Fig. **1**,
- **Fig. 4b**: ein Detail aus **Fig. 4a** in Form einer Koordinationselektronik,
- **Fig. 4c**: ein weiteres Detail aus **Fig. 4c** in Form eines Ausführungsbeispiels einer Fräserabfrageelektronik,
- **Fig. 5a**: ein Proinlay mit integriertem Stützkörper,
- **Fig. 5b**: ein für einen Abtastvorgang durch Aufkleben montiertes Proinlay,
- **Fig. 5c**: ein für den Abtastvorgang mittels einer Bohrung montiertes Proinlay aus **Fig. 5a**
- **Fig. 5d**: ein Montagebeispiel eines Proinlays im System
- **Fig. 6a - 6c**: eine vereinfachte, schematische Darstellung des Herstellungsvorganges eines Inlays.

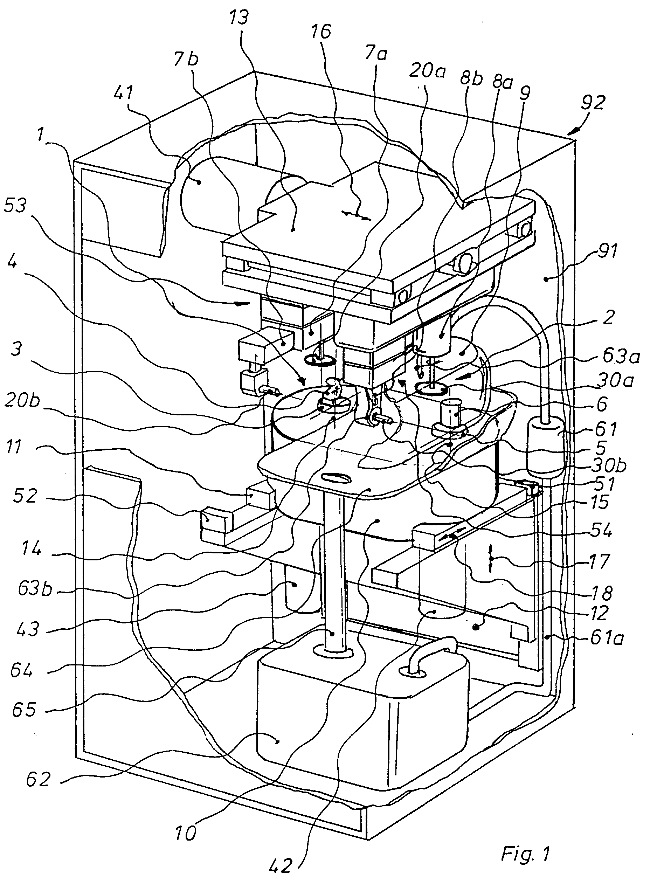

In der **Figur 1** ist mit **1** eine Originalseite und mit **2** eine Kopieseite bezeichnet. Auf der Originalseite **1** ist ein Proinlay-Aufnahmeteil **3** für die Aufnahme eines Proinlays **4**, und auf der Kopieseite **2** ein Substratkörper-Aufnahmeteil **5** für die Aufnahme eines Rohlings in Form eines Substratkörpers **6** angeordnet. Auf der Originalseite **1** sind ausserdem ein erster und zweiter berührungsempfindlicher Sensor **7a, 7b**, und auf der Kopieseite **2** eine erste und zweite Bearbeitungsvorrichtung **8a, 8b** vorgesehen. Die Kopieseite **2** ist mittels einer Haube **9** abgedeckt, so dass eine Verschmutzung der Einrichtung durch Kühl-Schmiermittel verhindert wird. Die Haube stellt zudem zusätzlich einen Schutz gegen bei der Bearbeitung weggeschleuderter Teile dar. Das Proinlay- und das Substratkörper-Aufnahmeteil **3, 5** sind auf einer mittels eines Rotationsantriebes **42** antreibbaren Rotations-Synchronisations-Vorrichtung **10** synchron drehbar angeordnet. Die Rotations-Synchronisationsvorrichtung **10** wird auf einer Verschiebevorrichtung **11** geführt, wobei die Verschiebevorrichtung **11** an einer Hubvorrichtung **12** befestigt ist, welche durch einen Hubantrieb **43** betätigt werden kann. Die Sensoren **7a, 7b** und die Bearbeitungsvorrichtungen **8a, 8b** sind an einem mittels eines Antriebes **41** verschiebbaren Lineartisch **13** angeordnet. Mit **20a** und **20b** sind Sensorenköpfe der Sensoren **7a, 7b** und mit **30a** und **30b** Bearbeitungswerkzeuge der Bearbeitungsvorrichtungen **8a, 8b** bezeichnet, wobei der erste Sensorenkopf **20a** und das erste Bearbeitungswerkzeug **30a** sowie der zweite Sensorenkopf **20b** und das zweite Bearbeitungswerkzeug **30b** jeweils die genau gleiche Form aufweisen und die gleiche Einbaulage gegenüber dem Substratkörper **6** bzw. dem Proinlay **4** haben. Die Form der beiden Bearbeitungswerkzeuge **30a, 30b** ist so gewählt, dass sich bei kombiniertem Einsatz möglichst alle auftretenden Oberflächenreliefs bei gleichzeitig hoher Lebenserwartung der Bearbeitungswerkzeuge herstellen lassen. So weist das erste Bearbeitungswerkzeug **30a** eine relativ grosse Oberfläche bei kleiner Schnittbreite auf. Das zweite Bearbeitungswerkzeug **30b** weist eine entlang seiner Rotationsachse zugespitzte Form auf.

Der Abstand zwischen den Zentren der Sensorenköpfe **20a, 20b** und den Zentren der zugeordneten Bearbeitungswerkzeuge **30a, 30b** ist gleich dem Abstand zwischen Rotationsachsen **14, 15** des Proinlay-Aufnahmeteiles **3** und des Substratkörper-Aufnahmeteiles **5**. Die Höhe des ersten Sensorkopfes **20a** zum ersten Bearbeitungswerkzeug **30a** ist dabei gleich der Höhe des zweiten Sensorkopfes **20b** zum zweiten Bearbeitungswerkzeugs **30b**. Die durch Pfeile **16, 17** gekennzeichneten Bewegungsrichtungen des Lineartisches **13** und der Hubvorrichtung **12** verlaufen senkrecht zueinander, wobei die Bewegungsrichtung des Lineartisches **13** parallel zu einer durch die Rotationsachsen **14, 15** gebildeten Ebene verläuft. Mit **51** ist ein erster Anschlag und mit **52** ein zweiter Anschlag der Verschiebevorrichtung **11** bezeichnet, deren Bewegungsrichtung durch einen Pfeil **18** gekennzeichnet ist. Die Anschläge **51, 52** bestimmen eine erste und zweite Position der Verschiebevorrichtung **11** und damit auch der Rotations-Synchronisationsvorrichtung **10**, so dass in der ersten Position die Zentren des ersten Sensorkopfes **20a** und des ersten Bearbeitungswerkzeuges **30a**, und in der zweiten Position die Zentren des zweiten Sensorkopfes **20b** und des zweiten Bearbeitungswerkzeuges **30b** vorzugsweise in der durch die Rotationsachsen **14, 15** gebildeten Ebene liegen.

Eine erste Justiervorrichtung **53** dient der Justierung der Lage der Sensorköpfe **20a, 20b** relativ zur Rotations-Synchronisationsvorrichtung **10**. Die Justiervorrichtung **53** weist zwei Freiheitsgrade in einer Ebene senkrecht zur Hubbewegungsrichtung **17** auf, wobei ein Freiheitsgrad parallel der Linearbewegung **16** und einer in der dazu senkrechten Richtung verläuft. Ein dritter Freiheitsgrad der Justiervorrichtung **53** verläuft parallel zur Hubbewegungsrichtung **17**. Von besonderer Bedeutung ist der Freiheitsgrad entlang der Linearbewegung **16**. Mit diesem Freiheitsgrad lässt sich das Grössenverhältnis zwischen Original und Kopie verändern. Dieser Freiheitsgrad dient in der Praxis der Optimierung der Passgenauigkeit. Deshalb ist die Justierung dieses Freiheitsgrades leicht zugänglich über beispielsweise eine nicht dargestellte Mikrometerschraube ausgeführt.

Eine zweite Justiervorrichtung **54** dient der Justierung des zweiten Bearbeitungswerkzeuges **30b**, das zu diesem Zweck auf der zweiten Justiervorrichtung **54** angebracht ist. Die Freiheitsgrade der Justiervorrichtung **54** verlaufen in einer Ebene senkrecht zur Hubbewegungsrichtung **17**. Die Freiheitsgrade verlaufen ferner parallel zur Linearbewegungsrichtung **16** und in der senkrecht dazu verlaufenden Richtung. Die Höhenverstellung dient der Justierung des Höhenverhältnisses des zweiten Bearbeitungswerkzeuges **30b** zum zweiten Sensor **7b**. Dieses Höhenverhältnis muss gleich dem Höhenverhältnis des ersten Sensors **7a** zum ersten Bearbeitungswerkzeug **30a** sein. Ein dritter Freiheitsgrad verläuft somit parallel zur Hubbewegung.

Eine Kühl-Schmiereinrichtung weist eine Pumpe **61** auf, die über eine Rohrleitung **61a** ein Kühlschmiermittel aus einem Reservoir **62** saugt. Die Rohrleitung **61a** ist mit Düsen **63a, 63b** verbunden, über welche das Kühl-Schmiermittel den Bearbeitungswerkzeugen **30a, 30b** zugeführt werden kann. Das Reservoir **62** ist mittels eines Abflussrohres **65** mit einem Sammelbecken **64** verbunden, so dass das im Sammelbecken **64** aufgefangene Kühl-Schmiermittel wieder dem Reservoir **62** zugeführt werden kann.

Die Hubvorrichtung **12**, der Lineartisch **13** und die Kühl-Schmiereinrichtung sind in einem Gehäuse **92** untergebracht, wobei die Hubvorrichtung **12** und der Lineartisch **13** an einer Rückwand **91** des Gehäuses und das Reservoir **62** der Kühl-Schmiereinrichtung am Boden des Gehäuses **92** befestigt sind.

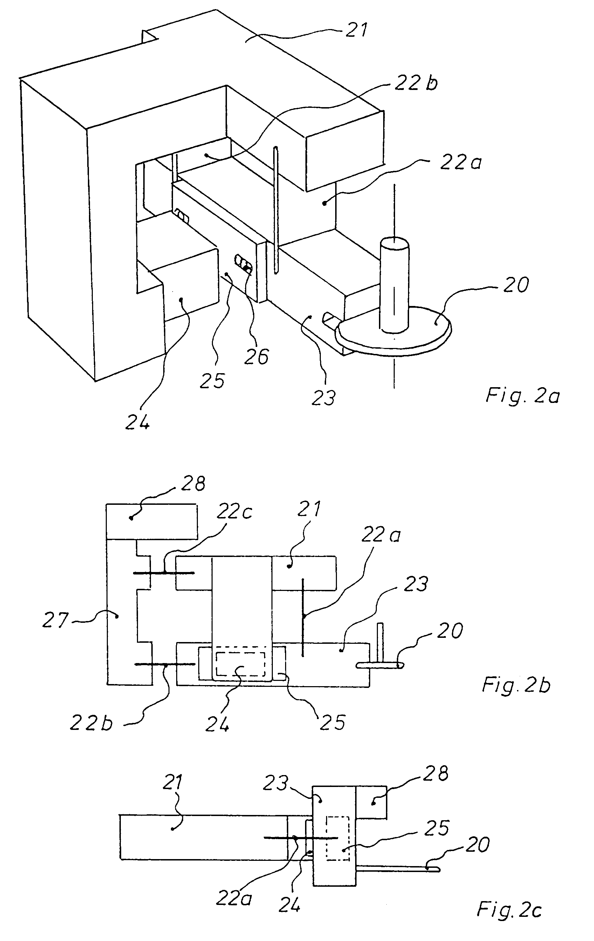

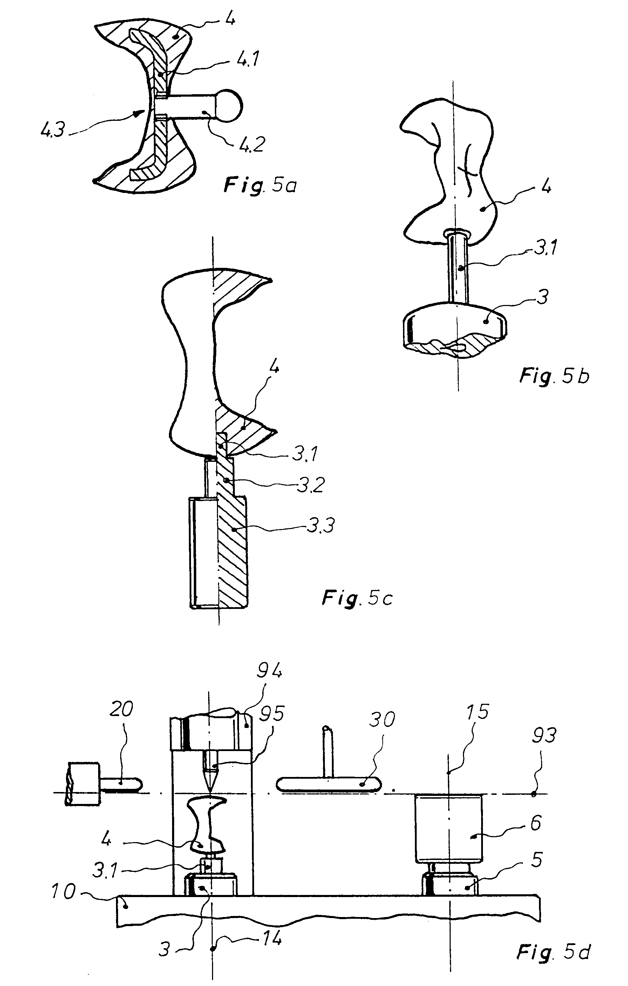

Gemäss **Fig. 2a** weist der Sensor **7** einen Stator **21** auf, der an einem nicht dargestellten Sensorhalter angeordnet ist. Ein Kopfträger **23** ist mittels eines ersten und zweiten flexiblen Halters **22a, 22b** mit dem Stator **21** beweglich verbunden. Die Verbindung erfolgt hier vorzugsweise über ein Federplättchen **22**. An der auf das Proinlay **4** (Fig. **5**) gerichteten Seite des Kopfträgers **23** ist ein Sensorkopf **20** angebracht. Der Sensorkopf **20** bildet die Peripherie zum Proinlay **4** und weist die gleiche Form wie das gegenüberliegende Bearbeitungswerkzeug auf. Insbesondere sind Krümmungsradien, Dicke, Werkzeugschaft und Einbaulage des Sensorkopfes **20** identisch mit denen des Bearbeitungswerkzeuges. Ein am Stator **21** befestigtes Hallelement **24** und wenigstens ein über eine Verschiebevorrichtung **26** am Kopfträger **23** angebrachter Magnet **25** bilden eine Wegmessvorrichtung. Wirkt eine Kraft auf den Sensorkopf **20**, so verschiebt sich der Kopfträger **23** relativ zum Stator **21**, und damit die Position des Magneten **25** zum Hallelement **24**. Hierbei liegt am Ausgang des Sensors **7** eine Spannung an, die proportional der Auslenkung des Sensorkopfes **20** von der Ruhestellung ist. Mittels der Verschiebevorrichtung **26** kann die Spannung des Sensors **7** in der Ruhestellung abgeglichen werden.

In der **Fig. 2b** ist mit **28** ein Massenausgleichselement bezeichnet, dass an einem Ausgleichsarm **27** befestigt ist. Der Ausgleichsarm **27** ist einerseits mittels eines dritten flexiblen Halters **22c** drehbar am Stator **21** aufgehängt und andererseits über den zweiten flexiblen Halter **22b** mit dem Kopfträger **23** verbunden. Das Massenträgheitsmoment des Massenausgleichelementes **28** bezüglich der aus dem dritten flexiblen Halter **22c** gebildeten Drehachse entspricht dem des Kopfträgers **23** und des unteren Teiles des Ausgleichsarms **27**. Bei einer beschleunigten Bewegung des Sensors wirkt der Kopfträger **23** infolge seiner Massenträgheit der beschleunigten Bewegung entgegen. Sensorkopf **20** und Kopfträger **23** versuchen sich entgegen der beschleunigten Bewegung zu bewegen. Die Beschleunigungskraft wirkt jedoch zugleich auf das Massenausgleichselement. Durch die ausgeglichenen Massenträgheitsmomente kompensieren sich die Massenträgheiten. Eine beschleunigungsbedingte Verschiebung des Kopfträgers **23** und des Sensorkopfes **20** bezüglich des Stators **21** wird verhindert. Der Sensor wird unempfindlich gegen Beschleunigungen. Es lassen sich somit beinahe beliebig hohe Beschleunigungen des Linearsystems realisieren. Dies ist für ein rasches und hochauflösendes Abtasten der Oberflächenunregelmässigkeiten wichtig.

Nach der **Fig. 2c** ist das Massenausgleichselement **28** direkt am Kopfträger **23** angebracht, der mittels des ersten flexiblen Halters **22a** derart am Stator **21** befestigt ist, dass sich die Massenträgheitsmomente bei einer beschleunigten Bewegung des Sensors wiederum kompensieren. Diese Ausführung hat den Vorteil, dass sie sowohl auf seitlich wie auch auf in Längsrichtung wirkende Kräfte anspricht. Dieses Ausführungsbeispiel ist besonders für den Einsatz von spitzen Sensorköpfen sinnvoll. In diesem Fall treten häufig Seitenkräfte auf, die durch die Rotationsbewegung des abzutastenden Proinlay hervorgerufen werden.

Der Sensor gemäss **Fig. 2c** kann zusammen mit einem der Sensoren (elektronisch oder optisch) gemäss **Fig. 2a** oder **2b** verwendet werden, wobei ein Doppelsensor gebildet wird. Hierbei entspricht der Sensor gemäss **Fig. 2c** dem zweiten Sensor **7b**, und einer der Sensoren gemäss **Fig. 2a** oder **2b** dem ersten Sensor **7a** der **Fig.1**.

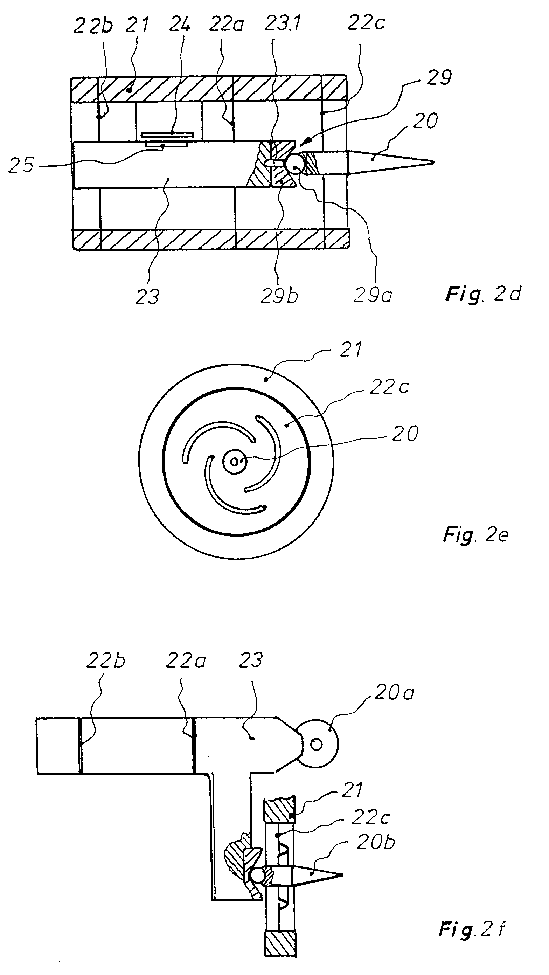

**Figur 2d** zeigt ein Ausführungsbeispiel eines Sensors der sowohl in der Querrichtung als auch in der Längsrichtung anspricht. Dieses Ausführungsbeispiel weist neben einem Stator **21**, einen Kopfträger **23** auf der von einem ersten federnden Element **22a** und einem zweiten federnden Element **22b** getragen wird. Der Sensorkopf **20** wird von einem dritten federnden Element **22c** so gehalten, dass als Verbindung zwischen Kopfträger **23** und Sensorkopf **20** ein im folgenden beschriebenes Kugelgelenk **29** gebildet wird.

Das Kugelgelenk **29** besteht aus einer Kugel **29a** und einem Kugelbett **29b** die stirnseitig am Kopfträger **23** beziehungsweise am Sensorkopf **20** angebracht ist. Die der Kugel **29a** zugewandte Seite des Kugelbettes **29b** weist eine vorzugsweise trichterförmige Vertiefung auf, in deren tiefsten Stelle die Kugel **29a** eine stabile, eindeutige (spielfreie) Lage einnimmt. In dieser Lage ist die Berührungsfläche zwischen Kugel **29a** und Kugelbett **29b** kreisförmig. Wirkt eine Kraft in Längsrichtung auf den Sensorkopf **20** wird der am Kopfträger **23** angebrachte Magnet **25** gegen das Hallelement **24** verschoben. Wirkt die Kraft seitlich auf den Sensorkopf bewirkt dies eine Verlängerung des Kugelgelenkes. Die Kugel **29a** verschiebt sich quer zum Kugelbett **29b**. Die ringförmige Kontaktfläche zwischen der Kugel **29a** und dem Kugelbett **29b** wird punktförmig. Dieser Berührungspunkt gleitet dabei vorzugsweise vom Zentrum auf der trichterförmigen Fläche des Kugelbettes nach aussen. Der Winkel der trichterförmigen Fläche ist so gewählt, dass ein Verschieben aus der tiefsten Lage der Kugel **29a** im Kugelbett **29b** ein Verschieben des Kopfträgers und somit eine Verlängerung des Kugelgelenkes **29** bewirkt. An die Gleiteigenschaften zwischen der Kugel **29a** und dem Kugelbett **29b** und an die Glattheit der Oberflächen werden sehr hohe Anforderungen gestellt. Die Kugel **29a** und das Kugelbett **29b** sind daher besipielsweise aus Saphir oder Diamant zu fertigen.

Das Verhältnis der Steifigkeit der Querrichtung zur Längsrichtung des ersten beziehungsweise zweiten federnden Elementes **22a, 22b** muss gross sein damit der Kopfträger beim Einwirken von Querkräften nicht in der Querrichtung verschoben wird. Das erste und das zweite federnde Element **22a, 22b** haben vorzugsweise eine Form ähnlich einer kurzen, flächenförmigen Spiralfeder (**Figur 2e**) an dessen Zentren der Kopfträger **23** befestigt ist. Die Metallbahnen dieser Elemente sind so gestaltet, dass sich eine Belastung gleichmässig über die gesamte Fläche des federnden Elementes verteilt. Das erste und das zweite ferdende Element kann ebenfalls aus einerseits am Stator, andererseits am Kopfträger befestigten Federplättchen oder C-förmigen Federplättchen gefertigt sein.

Das dritte federnde Element **22c** erlaubt eine Kippung des Sensorkopfes **20** in allen Richtungen um den Befestigungspunkt des Sensorkopfes **20** am dritten federnden Element **22c** und ein Verschieben des Sensorkopfes **20** in der Längsrichtung mit gleichmässig geringem Kraftaufwand. Gleichzeitig ist die Steifigkeit des dritten federnden Elementes in der Querrichtung gross. Das dritte federnde Element **22c** hat die gleiche Form wie das erste und das zweite federnde Element **22a** und **22b**. In dessen Zentrum ist der Sensorkopf befestigt. Das dritte federnde Element **22c** kann auch die Form einer Wellenmembrane oder einer durch partielle Materialentfernung geschwächten Wellenmembrane haben.

In **Figur 2f** ist ein Ausführungsbeispiel eines kombinierten Sensors mit zwei Sensorköpfen **20a, 20b** dargestellt. Bei diesem Ausführungsbeispiel wird somit lediglich eine Längenmessvorrichtung benötigt, da der Kopfträger beide Sensorköpfe **20a, 20b** trägt. Die Funktionsweise folgt aus der obiger Ausführungsbeispiele.

Da bei der Verwendung von federnden Elementen bei den zuvor beschriebenen Ausführungsbeispielen die Haftreibung entfällt, arbeiten die Sensoren bei mittleren Betätigungskräften von weniger als 30 pond, beispielsweise von 2,5 pond und weisen zugleich gute dynamische Eigenschaften -beispielsweise Anstiegs- und Abfallzeiten von wenigen Millisekunden- auf. Zudem ist die Messempfindlichkeit hoch und liegt bei einigen µm Auflösung.

Es ist auch möglich, anstelle der aus dem Hallelement **24** und dem Magneten **25** gebildeten Wegmessvorrichtung des Sensors, eine optische oder eine induktive Längenmessvorrichtung zu verwenden.

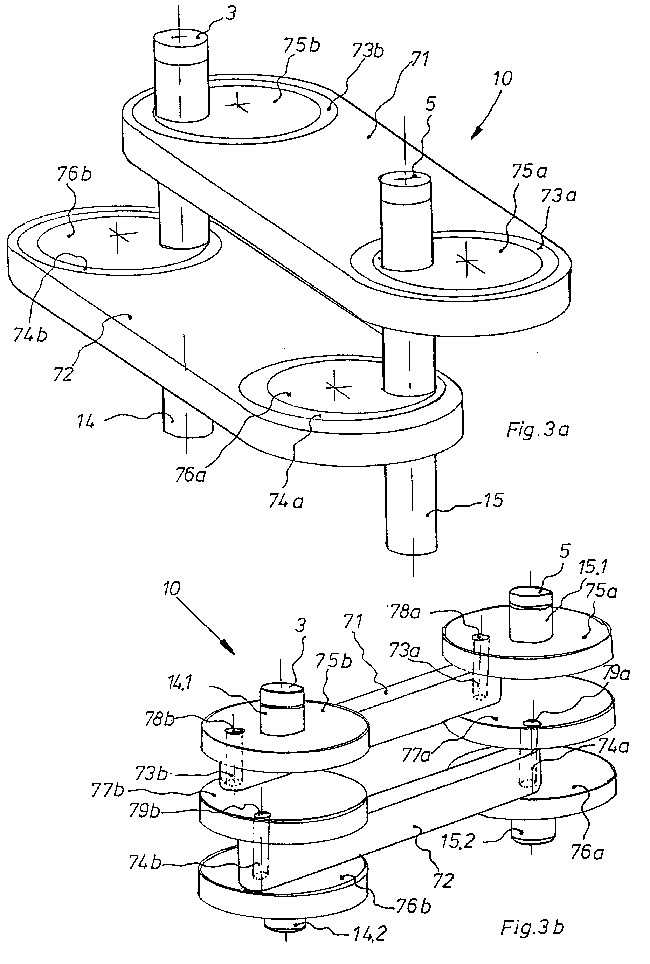

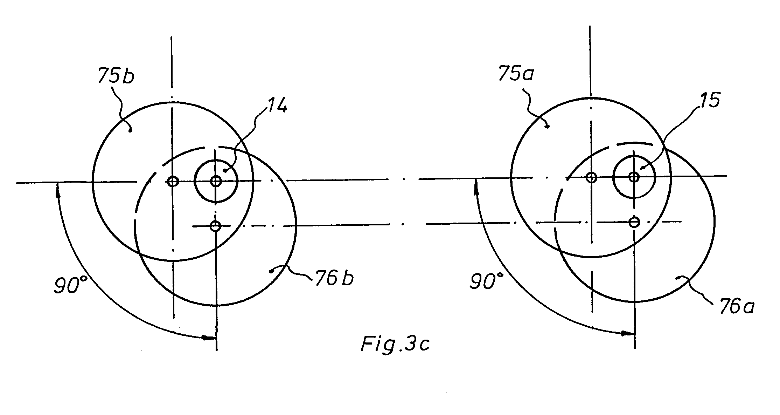

In der **Figur 3a** sind mit **71** und **72** Synchronisationsstangen bezeichnet, mittels welchen ein Drehmoment von der einen durch den Rotationsantrieb **42** (**Fig. 1**) angetriebenen Rotationsachse **15** auf die andere Rotationsachse **14** übertragen wird, wobei an dem einen Ende der einen Rotationsachse **15** das Substratkörper-Aufnahmeteil **5**, und an dem einen Ende der anderen Rotationsachse **14** das Proinlay-Aufnahmeteil **3** angeordnet ist (**Fig.1**). Die Rotationsachsen **14, 15** sind auf weiter nicht dargestellte Weise in einem Gehäuse der Rotations-Synchronisationsvorrichtung **10** (**Fig. 1**) gelagert. Die Synchronisationsstangen **71, 72** sind an beiden Enden mittels Lagerteilen **73a, 73b, 74a, 74b** und in diese eingesetzten Tellern **75a, 75b, 76a, 76b** mit den Rotationsachsen **14, 15** verbunden. Die gemeinsamen Zentren der Lagerteile und Teller sind exzentrisch zu den Rotationsachsen **14**, **15**, wobei der obere Teller **75a** und der untere Teller **76a** zusammen mit der Rotationsachse **15**, und der obere Teller **75b** und der untere Teller **76b** zusammen mit der Rotationsachse **14** aus einem Stück hergestellt sind. Hierbei bilden die Zentren der oberen Teller **75a, 75b** zu den Zentren der jeweils zugeordneten unteren Teller **76a, 76b** bezüglich der Rotationsachsen **14** bzw. **15** vorzugsweise einen rechten Winkel (**Fig. 3c**). Dadurch wird erreicht, dass bei Totpunktlage der einen Synchronisationsstange **71** bzw. **72**, die andere Synchronisationsstange **71** bzw. **72** ein maximales Drehmoment überträgt, wobei die Totpunktlage dadurch gekennzeichnet ist, dass die Zentren der Lagerteile **73a**, **73b** bzw. **74a, 74b** einer Synchronisationsstange **71** bzw. **72** in der gleichen Ebene liegen wie die Rotationsachsen **14, 15**. Auf diese Weise ist eine einwandfreie sichere Drehmomentübertragung für jeden Rotationswinkel gegeben.

Gemäss **Figur 3b** sind zwischen den oberen Tellern **75a, 75b** und den unteren Tellern **76a, 76b** mittlere Teller **77a, 77b** angeordnet. Die oberen Teller **75a, 75b** sind mit Rotationsachsenteilen **15.1** bzw. **14.1** und die unteren Teller **76a, 76b** mit Rotationsachsenteilen **15.2**, bzw. **14.2** fest verbunden, wobei die Teller jeweils zentrisch zu den Zentren der betreffenden Rotationsachsenteile **14.1**, **14.2** bzw. **15.1, 15.2** liegen. Die mechanische Verbindung zwischen den Rotationsachsenteilen **14.1, 14.2** wird über Bolzen **78b, 79b**, und die der Rotationsachsenteile **15.1, 15.2** über Bolzen **78a, 79a** hergestellt. Die Bolzen sind exzentrisch zu den Rotationsachsenteilen **14.1, 14.2** bzw. **15.1, 15.2** liegend mit den Tellern verbunden, wobei die Zentren der Bolzen **78b, 79b** bezüglich der Zentren der Rotationsachsenteile **14.1, 14.2**, und die Zentren der Bolzen **78a, 79a** bezüglich der Zentren der Rotationsachsenteile **15.1,15.2** vorzugsweise einen rechten Winkel bilden.Die Synchronisationsstange **71** ist über Lagerteile **73a, 73b** an den Bolzen **78a, 78b**, und die Synchronisationsstange **72** über Lagerteile **74a, 74b** an den Bolzen **79a, 79b** angelenkt.

Die Bearbeitungsvorrichtung **8** ist mittels einer Bearbeitungsvorrichtungshalterung **170a** so beweglich am Lineartisch befestigt, dass bei einem Ueberschreiten eines bestimmten Wertes der Krafteinwirkung auf die Bearbeitungsvorrichtung **8** in radialer Richtung, die Bearbeitungsvorrichtung **8** ausklinkt. Dieses Ausklinken verursacht ein Stoppen des Bearbeitungsvorganges.

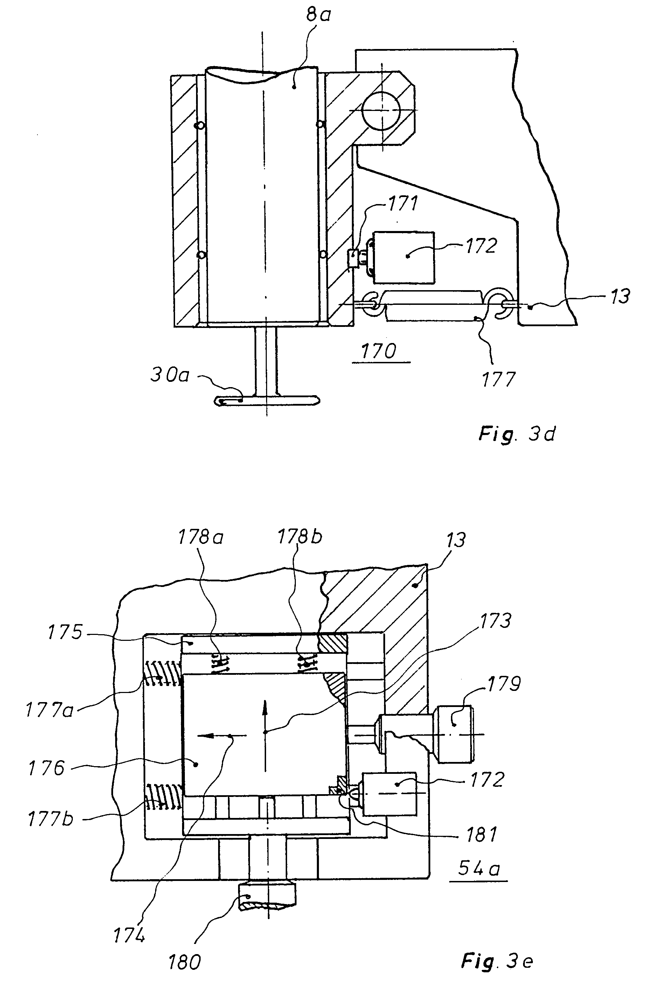

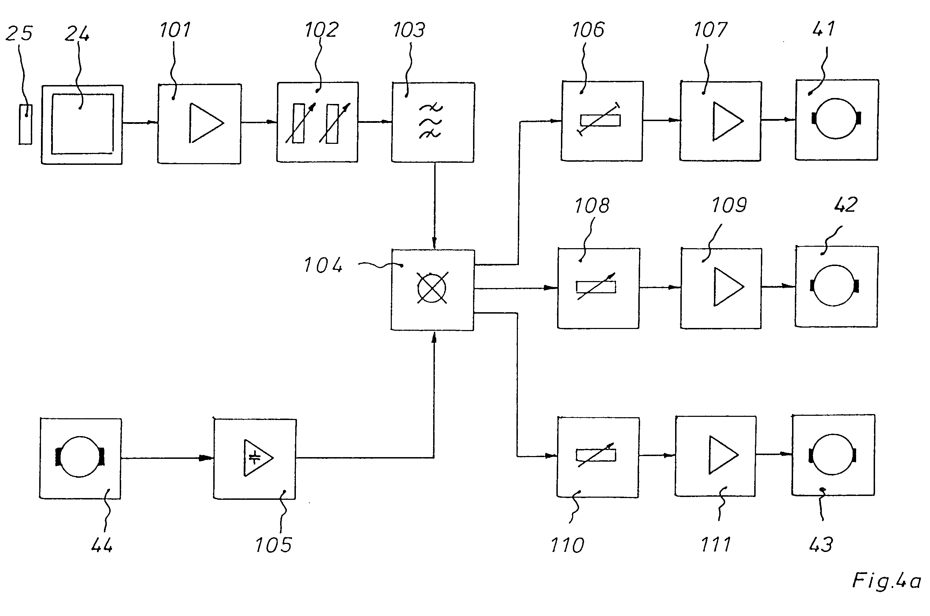

In **Figur 3d** ist ein Ausführungsbeispiel einer Bearbeitungsvorrichtungs-Halterung **170** dargestellt. In diesem Ausführungsbeispiel ist die Bearbeitungsvorrichtung **8** schwenkbar gelagert. Die Bearbeitungsvorrichtung **8** wird mittels einer Feder **177** auf einen justierbaren Anschlag **171** gedrückt. Der justierbare Anschlag **171** liegt auf der dem Substratkörper **6** zugewandten Seite der Bearbeitungsvorrichtung **8**. Die Bearbeitungsvorrichtung **8** ist mechanisch mit einem Schalter **172** verbunden. Uebersteigt die Krafteinwirkung auf dem Bearbeitungswerkzeug **30a** einen durch die Vorspannung der Feder **177** bestimmten Wert, öffnet der Schalter **172**. Das Öffnen des Schalters **172** bewirkt ein Stoppen des Bearbeitungsvorganges und ein Zurückfahren des Lineartisches **13** in seine Ruheposition.

Das in **Figur 3e** dargestellte Ausführungsbeispiel einer Bearbeitungsvorrichtungshalterung spricht auf übermässige Kräfte auf das Bearbeitungswerkzeug **30** in radialer Richtung **173** und tangentialer Richtung **174** an. In diesem Ausführungsbeispiel ist die Bearbeitungsvorrichtung **8** an einem XY-Verschiebetisch **54a** befestigt der die Justage der Bearbeitungsvorrichtung **8** in zwei Richtungen erlaubt. Der XY-Verschiebetisch **54a** weist einen oberen Verschiebetisch **175** und einen unteren Verschiebetisch **176** auf. Der obere Verschiebetisch **175** ist mit dem verschiebbaren Linieartisch **13** verbunden. Die Bearbeitungsvorrichtung **8** ist am unteren Verschiebetisch **176** befestigt. Der obere Verschiebetisch **175** und der untere Verschiebetisch **176** wird jeweils über federnde Elemente **177a, 177b, 178a** und **178b** auf eine gegenüberliegende Justierschraube **179, 180** gedrückt. Der Schalter **172** ist derart zwischen den zwischen den beiden Justierschrauben **179, 180** liegenden Ecke angeordnet, dass sowohl ein Verschieben des oberen als auch des unteren Verschiebetisches **175, 176** ein Öffnen des Schalters, und somit ein Stoppen des Systems verursacht. Diese Bearbeitungsvorrichtungs-Halterung ist besonders für feine, fingerförmige Bearbeitungswerkzeugformen geeignet.

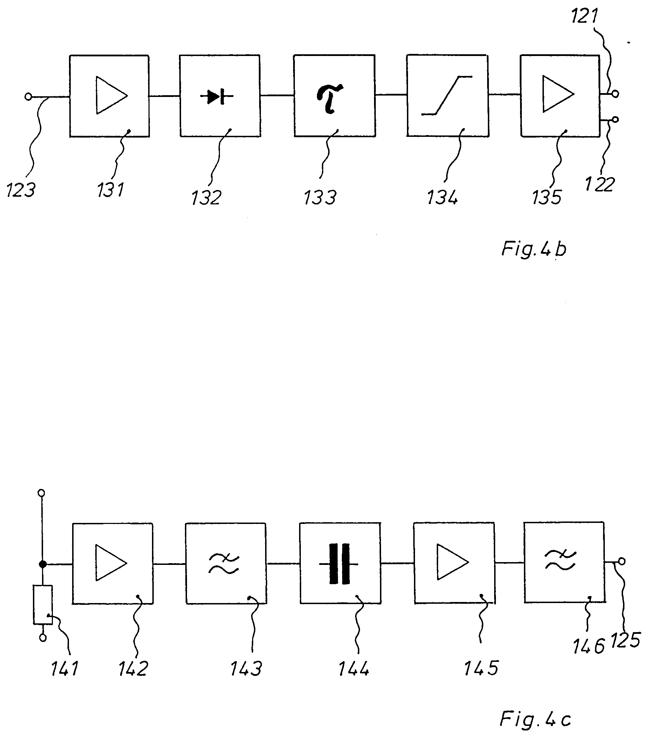

Nach **Figur 4a** ist das Hallelement **24 (Fig. 2a)** ausgangsseitig mit einem Vorverstärker **101** verbunden, dem eine Signalregelstufe **102** und eine Sperrfilterstufe **103** nachgeschaltet ist. Die Sperrfilterstufe **103** ist ausgangsseitig an einer Koordinationselektronik **104** angeschlossen. Mit **44** ist ein Antrieb der Bearbeitungsvorrichtungen **8a** bzw. **8b** (**Fig. 1**) bezeichnet, der mit einer Fräserabfrageelektronik **105** in Verbindung steht, die ausgangsseitig mit der Koordinationselektronik **104** verbunden ist. Ein erster Ausgang **121** der Koordinationselektronik **104** ist an einer Linearsignalaufbereitung **106** angeschlossen, der eine Linear-Leistungstreiberstufe **107** nachgeschaltet ist, mittels welcher der Antrieb **41** für den Lineartisch **13** (**Fig. 1**) angesteuert werden kann. Ein zweiter Ausgang **122** der Koordinationselektronik **104** ist mit einer Rotationsregelstufe **108** verbunden, welcher eine Rotationstreiberstufe **109** nachgeschaltet ist, die mit dem Rotationsantrieb **42** (**Fig. 1**) in Verbindung steht. Der zweite Ausgang **122** steht weiterhin mit einer Hubregelstufe **110** in Verbindung, welcher eine mit dem Hubantrieb **43** (**Fig. 1**) verbundene Hubtreiberstufe **111** nachgeschaltet ist.

**Figur 4b** zeigt die wichtigsten Komponenten eines Ausführungsbeispiels einer solchen Koordinationselektronik. Das aufbearbeitete Sensorsignal gelangt über einen Eingang **123** in einen ersten Anpassverstärker **131**. Vom Ausgang des ersten Anpassverstärkers gelangt das Signal in eine Präzisionsgleichrichterstufe **132**. Bei dieser Präzisionsgleichrichterstufe **132** handelt es sich um einen Vollweggleichrichter der den Absolutbetrag des Sensorsignals bildet. Ausgehend davon, dass die Sensorspannung in der Sollposition gleich Null ist, liegt am Ausgang der Präzisionsgleichrichterstufe **132** eine Spannung an, die proportional zur Auslenkung des Senors in seiner Sollposition ist, unabhängig davon, ob diese Auslenkung in negativer oder in positiver Richtung verläuft. Liegt die Spannung am Ausgang der Präzisionsgleichrichterstufe **132** über einem bestimmten Schwellwert, gibt eine Schwellwertstufe **134** ein Signal an eine Treiberstufe **135**, das die Verlangsamung der Geschwindigkeiten des Hub- und des Rotationsmotors bewirkt. Ein Verzögerungsglied **133** schwächt unerwünscht hohe Frequenzanteile des Sensorsignals ab.

**Figur 4c** zeigt die wichtigsten Komponenten eines Ausführungsbeispiels einer Fräserabfrageelektronik. Ein Shuntwiderstand **141** erzeugt dabei eine Spannung die proportional zur Leistunsg- bzw. Stromaufnahme des Bearbeitungswerkzeuges ist. Eine erste Verstärkerstufe **142** verstärkt diese Spannung über dem Shuntwiderstand **141**. Eine erste Tiefpassfilterstufe **143** dämpft die hohen Frequenzanteile die vom Antriebsmotor des Bearbeitungswerkzeuges stammen. Eine Differentiatorstufe **144** differenziert das Signal. Das differenzierte Signal welches nunmehr proportional zu den Leistungsänderungen des Bearbeitungswerkzeuges ist, wird in einer zweiten Verstärkerstufe **145** auf die von der Koordinationselektronik benötigten Werte gebracht. Eine zweite Filterstufe **146** unterdrückt zusätzlich die vom Antriebsmotor herrührenden Frequenzanteile. Eine gute Dämpfung der von dem Antriebsmotor verursachten Frequenzkomponenten ist notwendig, da die Amplituden dieser unerwünschten Frequenzen höher als die zu detektierenden lastbedingten Stromaufnahmeänderungen sein können. Eine steile Filtercharakteristik, in diesem Ausführungsbeispiel, ist durch die Hintereinanderschaltung zweier Filterstufen realisiert. Dies ist wünschenswert, da dadurch ein möglichst grosses Sinalspektrum verarbeitet werden kann, was wiederum zu einer hohen Ansprechgeschwindigkeit der Fräserabfrageelektronik führt.

Die Anfertigung eines Proinlays sowie die Herstellung eines Inlays gemäss vorstehend beschriebener Einrichtung erfolgt wie nachstehend an zwei Beispielen beschrieben.

Zunächst entfernt der Zahnarzt auf bekannte Weise das befallene Zahnmaterial. Der damit geschaffene Hohlraum im Zahn wird mit einem lichthärtendem Proinlaymaterial gefüllt. Nun kann im noch weichen Zustand des Füllmaterials die Kaufläche vorgeformt werden. Nach der Härtung des Proinlaymaterials mittels Licht weist das Proinlaymaterial eine gummiartige Konsistenz auf und kann somit leicht aus dem Hohlraum des Zahnes entfernt werden.
Das auf diese Weise entstandene Proinlay **4** entspricht der exakten Form des zuvor entfernten Zahnmaterials. Ein Proinlaymaterial ist ausführlich in der **EP-B1- 0 195 224** beschrieben.

Zur Vereinfachung der Herausnahme des Proinlays **4**aus dem präparierten Zahn und zur Verringerung der Materialschrumpfung (sh. **Figur 5a**) im Proinlay **4** wird ein Stützkörper **4.1** in das Proinlay **4** eingebettet. Der Stützkörper **4.1** ist mit einem Griff **4.2** versehen der mittels eines Gewindes **4.3** am Stützkörper **4.1** befestigt ist. Die Form des Stützkörpers **4.1** ist so gestaltet, dass dieser in die Präparation passt. Entsprechend der verschiedenen Zahngrössen und Präparationen gibt es verschiedene vorgefertigte Stützkörperformen. Durch dessen geeignete Form reduziert der Stützkörper **4.1** die Materialschrumpfung im Proinlay **4** besonders entlang der längsten Achse des Proinlays **4**. Vor der Entfernung des Proinlays **4** aus der Präparation wird der Griff **4.2** vom Stützkörper **4.1** getrennt. Der Stützkörper selbst besteht vorzugsweise aus lichttransparentem Material. Nach der Entnahme des Griffs **4.2** kann die Kaufläche des Zahns vorgeformt werden. nach der Härtung des Materials kann das Proinlay im Zahn noch sauber ausgestaltet werden. Da das Material im gehärteten Zustand noch weich ist, erfolgt diese Ausgestaltung mit Werkzeugen, die das Material abtragen, nicht aber den Zahn beschädigen. Zur Entnahme des Proinlays **4** wird der Griff **4.2** wieder in den Stützkörper **4.1** eingedreht und das Proinlay aus der Präparation entfernt. Mittels des Griffs **4.2** kann das Proinlay **4** einfach und sicher aus der Präparation entfernt werden. Zur Weiterverarbeitung wird der Griff **4.2** vom Proinlay **4** entfernt und die durch den Griff **4.2** gebildete Oeffnung im Proinlay **4** geschlossen.

Daraufhin wird das Proinlay **4** mittels eines Haltestiftes **3.1** (**Figur 5b**) auf dem auf der Originalseite **1** befindlichen Proinlay-Aufnahmeteil **3** angebracht (**Fig. 1**). Hierbei kann, wegen der geringen Anpresskraft beim Abtasten, der Haltestift **3.1** an einer Fläche des Proinlays angeklebt werden, oder bei Fehlen einer geeigneten Fläche in eine Bohrung des Proinlays gesteckt werden.

**Figur 5c** zeigt ein Ausführungsbeispiel eines Haltestiftes **3.1** der für die Befestigung mittels einer Bohrung geeignet ist. Dieser Haltestift **3.1** weist eine erste Abstufung **3.2** und eine zweite Abstufung **3.3** auf. Der Durchmesser des Haltestiftes **3.1** ist so bemessen, dass dieser spielarm in das Proinlay-Aufnahmeteil **3** passt (Gleitsitz). Die zweite Abstufung weist einen Durchmesser auf, der dem eines gängigen Bohrerdurchmessers entspricht und einen Pressitz in der Bohrung im Proinlay **4** bewirkt. Der Durchmesser der ersten Abstufung entspricht dem Durchmesser des Stumpfes der im Substratkörper **6** am unteren Ende des kopierten Inlays gebildet wird. Der Durchmesser der ersten Abstufung wird einerseits minimal gehalten, muss andererseits so gross gewählt werden, dass das kopierte Inlay nicht selbständig unter der Belastung des Bearbeitungswerkzeuges **30** am Stumpf abbricht. Der Durchmesser der ersten Abstufung kann beispielsweise 3mm, der der zweiten 1,5mm, betragen.

Auf der Kopieseite **2** wird der farblich auf das Zahnmaterial abgestimmte Substratkörper **6** auf dem Substratkörper-Aufnahmeteil **5** angebracht (**Fig. 1**), wobei der Substratkörper **6** mit einem nicht dargestellten Substrathalter versehen ist, der die exakte und stabile Positionierung des Substratkörpers **6** auf dem Substratkörper-Aufnahmeteil **5** während des Bearbeitungsvorganges gewährleistet.

Die Montage des Proinlays **4** und des Substratkörpers **6** auf dem Proinlay-Aufnahmeteil **3** beziehungsweise dem Substratkörper-Aufnahmeteil **5** wird anhand der **Figur 5d** erläutert. Zum Finden der geeigneten Montagehöhe des Proinlays **4** in dem Proinlay-Aufnahmeteil **3** ist auf der Originalseite **1** ein in der Rotationsachse **14** des Proinlay-Aufnahmeteils liegender und entlang dieser Achse nach oben bewegbarer Führungsstift **95** vorgesehen. Dieser Führungsstift **95** ist vorzugsweise an einem Führungsschlitten **94** befestigt, dessen Führungsschiene mit der Rotations-Sychronisationsvorrichtung **10** verbunden ist. Die Ruheposition der dem Proinlay-Aufnahmeteil **5** zugewandten Spitze des Führungsstiftes **95** markiert in der Originalseite **1** die Oberkante des Substratkörpers **6**. Dabei sollte die Spitze des Führungsstiftes **95** um eine kleine Distanz über der Oberkantenhöhe **93** des Substratkörpers **6** sein. Zur Verbesserung der Zugänglichkeit bei der Montage des Proinlays **4** wird die Spitze des Führungsstiftes **95** von dem Proinlay-Aufnahmeteil **5** wegbewegt und der Haltestift **3.1** in das Proinlay-Aufnahmeteil **5** geführt. Die Spitze des Führungsstiftes **95** wird in ihre Ruheposition zurückversetzt und das Proinlay **4** soweit der Spitze des Führungsstiftes **95** angenähert bis der Spalt zwischen der Oberkante des Proinlays **4** und der Spitze des Führungsstiftes **95** kleiner ist als die Stärke des Bearbeitungswerkzeuges **30** beziehungsweise des Sensorkopfes **20**. In dieser Position wird der Haltestift **3.1** im Proinlay-Aufnahmeteil **5** fixiert.

In dieser Montagehöhe berührt das Bearbeitungswerkzeug **30** den Substratkörper **6** nur kurz vor der ersten Berührung des Sensorkopfes **20** das Proinlay **4** berührt. Das Bearbeitungswerkzeug **30** beginnt unmittelbar nach Erreichen der Substratoberkante die Formung des Inlaykörpers. Mittels der Spitze des Führungsstiftes **95** lässt sich somit das Proinlay **4** in einer Höhe montieren, die die optimale Ausnutzung des Substratkörpers **6** bei einem Minimum an unnötig zu entfernendem Material ermöglicht. Zusätzlich führt die Spitze des Führungsstiftes **95** den Sensorkopf **20** und das Bearbeitungswerkzeug **30** vor dem Erreichen des Proinlays **4** beziehungsweise des Substratkörpers **6** in den Rotationsachsen **14** beziehungsweise **15**. Zum Zeitpunkt der ersten Berührung des Sensorkopfes **20** mit dem Proinlay **4** und des Bearbeitungswerkzeuges **30** mit dem Substratkörper **6** befindet sich dadurch die Spitze des Sensorkopfes **20** nahe der Rotationsachse **14** des Proinlays **4** und die Spitze des Bearbeitungswerkzeugs **30** nahe der Rotationsachse **15** des Substratkörpers **6**.

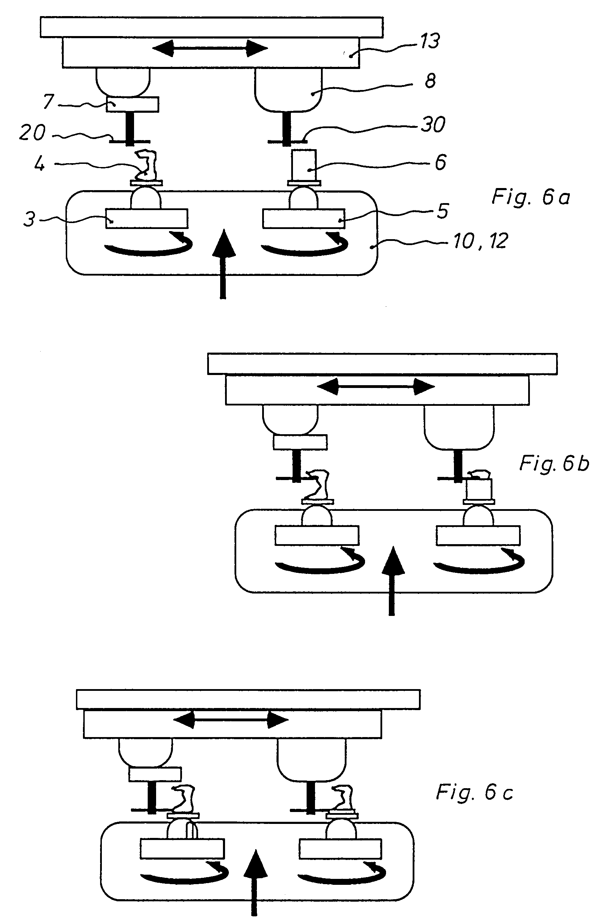

Der Bearbeitungsvorgang beginnt mit der Zustellphase (**Fig. 6a**), wobei das Bearbeitungswerkzeug **30**, das Proinlay-Aufnahmeteil **3** und das Substratkörper-Aufnahmeteil **5** rotieren, die Hubvorrichtung **12** die Rotations-Synchronisationsvorrichtung **10** nach oben fährt und der Lineartisch **13** in die Anfangsposition geschoben wird.

Während der Bearbeitung (**Fig. 6b**) führen Proinlay **4** und Substratkörper **6** eine überlagerte Hub- und Rotationsbewegung aus. Somit beschreibt ein virtueller Punkt auf dem Substratkörper- bzw. Proinlayrand eine schraubenförmige Bewegung. Durch Verfahren des Lineartisches **13** kann der Sensorkopf **20** bzw. das Bearbeitungswerkzeug **30** in jeden beliebigen Abstand zu den Rotationsachsen **14, 15** der Proinlay- und Substratkörper-Aufnahmeteile **3, 5** gebracht werden. Die Informationen, die beim Abtasten des Proinlays **4** durch den Sensorkopf **20** vom Sensor **7** erzeugt werden, werden an den Antrieb **41** des Lineartisches **13** gegeben. Der berührungsempfindliche Sensor **7**, der Antrieb **41** des Lineartisches **13** und der Lineartisch **13** bilden einen Regelkreis. Dabei regelt der Sensor **7** wie nachstehend näher erläutert, den Antrieb **41** des Lineartisches **13** so, dass der Sensorkopf **20** stets die Oberfläche des Proinlays **4** mit konstanter Kraft berührt. Dies bedeutet, dass der Sensor **7**, und somit der Lineartisch **13** mit der Bearbeitungsvorrichtung **8**, exakt dem Relief der Oberfläche des Proinlays **4** folgt. Da Sensorkopf **20** und Bearbeitungswerkzeug **30** exakt gleiche Formen und gleiche Einbaulage aufweisen, formt das Bearbeitungswerkzeug **30** den gleichen Oberflächenverlauf in den Substratkörper **6** wie der des Proinlays **4**.

In der Endphase des Bearbeitungsvorganges (**Fig. 6c**), beim Erreichen der Auflage des Proinlays **4**, stoppt der Bearbeitungsvorgang.

Zur Erhöhung der Passgenauigkeit kann in einem zweiten Bearbeitungsvorgang und unter Verwendung eines feinen Bearbeitungswerkzeuges der in den **Fig. 6a-6c** dargestllte Vorgang wiederholt werden.

Das fertige Inlay wird dann der Kopieseite **2** entnommen. Nach entsprechenden Reinigungsarbeiten wird das Inlay im Hohlraum des Zahnes eingesetzt und einzementiert, anschliessend poliert. Das Inlay ist dabei so genau gefertigt, dass in den meisten Fällen die exakte Passung auf Anhieb und ohne jegliche Korrekturarbeiten erreicht wird.

In einer zweiten Vorgehensweise wird das Proinlay **4** auf einem Abdruck hergestellt. Ein Zahnarzt fertigt dabei auf bekannte Weise einen Abdruck des zu präparierenden Zahnes an. Diesen Abdruck übergibt er zur Weiterbearbeitung einem Zahntechniker oder einer Hilfskraft. Der Zahntechniker oder die Hilfskraft stellen das zu erstellende Proinlay **4** auf dem Abdruck her. Dabei wird das Proinlay **4** -wie zuvor beschrieben- mit einem Haltestift versehen und in der Einrichtung montiert.

Der Vorteil einer solchen Vorgehensweise liegt darin, dass der Zahnarzt lediglich einen Abdruck -auf bekannte Art und Weise- abnehmen muss, dass dann die Modellierung des Proinlays vom Zahntechniker vorgenommen werden kann, und dass die Passung des Inlays vor der Einzementierung kontrolliert werden.

Während des automatischen Herstellungsvorganges der Inlays in der Vorrichtung wird das Signal am Ausgang des Sensors **7** dem Vorverstärker **101** der elektronischen Steuerschaltung (**Fig. 4a**) zugeführt. Mittels der im Signalweg folgenden Signalregelstufe **102** lassen sich wie nachstehend näher beschrieben, die Sensorruhespannung sowie die Skalierung der Sensorsignalspannung einstellen. Die Sperrfilterstufe **103** unterdrückt, wie ebenfalls weiter unten beschrieben, unerwünschte Frequenzen im Signalspektrum. Die derart aufbereitete Sensorsignalspannung wird der Koordinationselektronik **104** zugeführt, in welche auch das Ausgangssignal der Fräserabfrageelektronik **105** eingespeist wird. Ueber die Rotationsregestufe **108** (**Fig. 4b**) kann im übrigen der Grad der Verlangsamung eingestellt werden.

Die über den ersten Ausgang **121** der Koordinationselektronik **104** der Linearsignalaufbereitung **106** zugeführte Sensorsignalspannung ist umgekehrt proportional zur Auslenkung des Sensorkopfes **20** aus der Ruheposition. Die Geschwindigkeit und Richtung des Linearantriebes **41** sind proportional zur Spannung am Eingang der Linearsignalaufbereitung **106**. Ist der Sensorkopf **20** in seiner Ruheposition, so liegt am Ausgang des Sensors **7** die Ruhespannung an. Bei Anliegen der Ruhespannung am Eingang der Linearsignalaufbereitung **106** bewegt der Linearantrieb **41** den Sensor **7** auf das Proinlay **4** zu. Berührt der Sensorkopf **20** das Proinlay **4**, so entsteht eine Auslenkung und beispielsweise ein Spannungsanstieg am Ausgang des Sensors **7**. Dieser Spannungsanstieg verlangsamt die Bewegung des Linearantriebs **41**. Bei Erreichen einer bestimmten Auslenkung (Sollposition) kommt der Linearantrieb **41** zum Stillstand. Genau auf diese Sollposition stellt sich das somit gebildete Servosystem stets ein. In der Sollposition haben Sensorkopf **20** und Bearbeitungswerkzeug **30** die gleiche Position zu den Rotationsachsen **14, 15**. Durch das Servosystem und durch die gleiche Form von Sensorkopf **20** und Bearbeitungswerkzeug **30**, folgt das Bearbeitungswerkzeug **30** exakt der dem Verlauf des Sensorkopfes **20** auf der Proinlayoberfläche.

Sensor **7** und Bearbeitungswerkzeug **20** sind gemäss **Fig. 1** starr über den Lineartisch **13** miteinander verbunden. Während der Bearbeitung entstehen beträchtliche Vibrationen in der Bearbeitungsvorrichtung durch Lagergeräusche und durch die mechanische Bearbeitung des Substratkörpers **6**. Diese Vibrationen übertragen sich auf den Sensor **7** (Mikrophoneffekt) und werden im Servosystem verstärkt. Bei den geringen Anpresskräften des Sensorkopfs **20** auf das Proinlay und bei den feinen Messwegauflösung des Sensors **7** können diese Vibrationen ein Störsignal verursachen, dessen Amplitude ein Vielfaches des eigentlichen Abtastsignals betragen kann. Das Frequenzspektrum der Störsignale ist von der Drehzahl des Bearbeitungsvorrichtung abhängig. Das Spektrum weist bei der Drehzahlfrequenz und bei allen Vielfachen einen Peak auf. Die Frequenz dieses Peaks liegt in einem Frequenzbereich wo Signalkomponenten des Abtastsignals vorhanden sind. Aus diesem Grund können diese Störsignale nicht durch eine Reduzierung der Ansprechgeschwindigkeit des Sensors **7** beseitigt werden. Zur Beseitigung dieser Störfrequenzen sind die Filterstufen als Sperrfilter (Notch-Filter) aufgebaut, die einen engen Notch aufweisen, dessen Mittenfrequenz gleich der Frequenz der Drehzahl der Bearbeitungsvorrichtung bzw. deren Vielfachen ist. Somit entsteht ein Frequenzgang der Sensorelektronik der spiegelbildlich zum Spektrum der Störsignale ist.

Bei steigenden Höhenunterschieden auf der abzutastenden Oberfläche, steigt der vom Lineartisch **13** zurückzulegende Weg. Bei steilen Kanten im Oberfächenrelief kann es vorkommen, dass der Lineartisch **13** wegen seiner endlichen Geschwindigkeit nicht mehr dem Oberflächenrelief folgen kann. Der Sensorkopf **20** hebt von der Oberfläche ab oder er übt unzulässig hohe Kräfte auf die abzutastende Oberfläche aus. Beides führt zu Fehlern, wobei das letztere sogar zur Beschädigung des Proinlays **4** führen kann.

Die Koordinationselektronik **104** hat nun zur Aufgabe diese Fehler zu verhindern. Dies wird dadurch erreicht, dass die Koordinationselektronik **104** die Sensorauslenkung stets innerhalb eines bestimmten Fensters hält. Da die Sensorauslenkung proportional zur Sensorsignalspannung ist, darf die Sensorsignalspannung einen unteren Spannungswert nicht unterschreiten und einen oberen Spannungswert nicht überschreiten. Erreicht die Sensorsignalspannung den oberen oder unteren Spannungswert, so gibt die Koordinationselektronik **104** am zweiten Ausgang **122** ein Signal ab, das die Rotations- und die Hubgeschwindigkeit soweit und solange verlangsamt, bis die Sensorsignalspannung innerhalb der beiden Spannungswerte liegt. An der Hubregelstufe **110** sowie an der Rotationsregelstufe **108** kann der Grad der Verlangsamung in Form der Hub- bzw. Rotationsgeschwindigkeit eingestellt werden.

Bei den hohen Maximalgeschwindigkeiten der Linearbewegung können beim Bearbeitungsvorgang unzulässig hohe Belastungen des Bearbeitungswerkzeuges auftreten. Diese treten dann auf, wenn grosse Materialmengen abgetragen werden müssen. Zum Schutz des Bearbeitungswerkzeuges wird deshalb die Leistungsaufnahme der Bearbeitungsvorrichtung von der Fräserabfrageelektronik **105** laufend gemessen. Um unempfindlich gegen Leistungsaufnahmevariationen der Bearbeitungsvorrichtung infolge von Alterungserscheinungen sowie Abmessungsunterschiede des Bearbeitungswerkzeuges zu sein, wird in der Fräserabfrageelektronik **105** ein Zwischensignal erzeugt das proportional zum Differential der Leistungsaufnahme der Bearbeitungsvorrichtung ist. Am Ausgang der Fräserabfrageelektronik **105** erscheint ein Signal, sobald der Wert des Zwischensignals einen Schwellwert überschreitet. Dieses Signal wird der Koordinationselektronik **104** zugeführt. In der Koordinationselektronik **104** führt dieses Signal zu einer Verlangsamung sowohl der Linearbewegung als auch der Rotations- und Hubbewegung. Diese Bewegungen werden soweit und solange verlangsamt bis die Leistungsaufnahme der Bearbeitungsvorrichtung wieder innerhalb des erlaubten Bereichs liegt.

Bei der Herstellung des Inlays in zwei zeitlich hintereinander ablaufenden Bearbeitungsdurchgängen, läuft jeder einzelne Bearbeitungsdurchgang wie vorstehend anhand der **Fig. 6a-6c** für die Anfertigung eines Inlays in einem Bearbeitungsdurchgang beschrieben ab. Während des ersten Bearbeitungsdurchganges befindet sich die Rotations-Synchronisationsvorrichtung **10** in der durch den ersten Anschlag **51** der Verschiebevorrichtung **11** definierten ersten Position (**Fig. 1**). In dieser Position fertigt das erste Bearbeitungswerkzeug **30a** die groben Umrisse des Inlays und trägt dabei den grössten Teil des Materials ab, wobei wegen der kleinen Schnittbreite scharfe, entlang der Rotationsrichtung des Substratkörpers **6** verlaufende Kanten hergestellt werden können. Mit Vollendung der Aufwärtsbewegung der Hubvorrichtung **12** über die gesamte Länge des Proinlays **4** ist auch der erste Bearbeitungsdurchgang beendet. Der Lineartisch **13** fährt danach in seine Ruheposition, die Hubvorrichtung **12** in die Anfangsposition zurück und die Verschiebevorrichtung **11** in die zweite, durch den zweiten Anschlag **52** gebildete Position. In dieser Position wird der zweite Bearbeitungsdurchgang durchgeführt, wobei sich die Hubvorrichtung **12** vorzugsweise abwärts bewegt. Der zweite Bearbeitungsdurchgang kann mit unterschiedlicher Hub- und Rotationsgeschwindigkeit -unabhängig vom ersten Bearbeitungsdurchgang- durchgeführt werden.

Mit dem während des zweiten Bearbeitungsdurchganges zum Einsatz kommenden zweiten Bearbeitungswerkzeug **30b** werden die feinen Strukturen der Inlayoberfläche hergestellt. Da dabei nur geringe Materialmengen abgetragen werden müssen, sind die auf den Substratkörper **6** wirkenden Kräfte klein. Aufgrund der spitzen Ausformung des zweiten Bearbeitungswerkzeuges **30b** lassen sich feine Vertiefungen, sowie winklige, paralell zur Rotationsrichtung des Substratkörpers **6** verlaufende Rillen und Grübchen der Oberfläche erzeugen.

Anstatt mit zwei Sensoren **7a, 7b** und zwei Bearbeitungsvorrichtungen **8a, 8b** kann, wie bereits anhand der **Fig. 6a-6c** beschrieben, die Einrichtung auch nur mit einem Sensor **7** und einer Bearbeitungsvorrichtung **8** ausgerüstet werden.

Für besonders einfache Inlays, oder wo weniger Anforderungen an die Genauigkeit gestellt werden, kann unter Umständen ein Inlay in nur einem Durchgang und unter Verwendung des ersten Bearbeitungswerkzeuges **30a** hergestellt werden. Wie aus **Fig. 6** ersichtlich, benötigt eine Vorrichtung die mit nur einem Bearbeitungswerkzeug arbeitet, weniger Teile für dessen Funktion benötigt. Insbesondere kann in einer solchen Vorrichtung auf die Verschiebevorrichtung **11**, den zweiten Sensor **20b** und das zweite Bearbeitungswerkzeug **30b** mit dessen Justiervorrichtung **54** verzichtet werden. Die erste Justiervorrichtung **53** für den Sensor benötigt dann die zwei Freiheitsgrade senkrecht zur Hubbewegungsvorrichtung **17**.

Für Anwendungen, in denen als Substratmaterial weichere Substanzen -wie beispielsweise Kunststoff- verwendet werden, ist ebenfalls ein System mit nur einem Bearbeitungswerkzeug **30b** denkbar. Bei entsprechend weichen Materialien können mit einem Werkzeug mit entsprechend kleiner Oberfläche ausreichende Standzeiten erreicht werden. Bei einem solchen System kann auf den ersten Sensor **20a**, das erste Bearbeitungswerkzeug **30a**, die Verschiebevorrichtung **11** sowie auf den zweiten Justiertisch **54** verzichtet werden. Die Freiheitsgrade für den ersten Justiertisch **53** reduzieren sich ebenfallsauf die zwei Freiheitsgrade senkrecht zur Hubbewegung.

## Patentansprüche

1. Verfahren zur Herstellung eines Zahnersatzteiles für einen Zahn, insbesondere in der Art von Inlays, Onlays und Kronen, bei welchem
- ein härtbares Material zur Herstellung eines Modellkörpers verwendet wird,
- am Modellkörper die Kontur des Zahnes vorgeformt wird,
- der Modellkörper (**4**) hergestellt wird,
- der Modellkörper nach Härtung des Materials von seinem Herstellungsort entfernt wird, wird,
- der Modellkörper mittels einer Berührungs-Sensoreinheit (**7a**) abgetastet wird und
- die Abtastbewegungen auf eine Bearbeitungswerkzeugeinheit (**30a**) übertragen werden, welche aus einem Rohling in Form eines Substratkörpers (**6**) formmässig ein dem Modellkörper (**4**) entsprechendes fertiges Zahnersatzteil formt,
**dadurch gekennzeichnet**,
- dass die genannten Abtastbewegungen Grob-Abtastbewegungen und die genannnte Bearbeitung eine Grobbearbeitung sind, und
- dass anschliessend an die Grob-Abstastung und die Grob-Bearbeitung eine Fein- Abtastung des Modellkörpers (**4**) durch eine zweite, hochpräzise und reibungsarme Berührungs-Sensoreinheit (**7b**) und eine Fein-Bearbeitung des Substratkörpers (**6**) mittels einer zweiten Werkzeugeinheit (**30b**) erfolgt, wobei
- die mittlere Anpresskraft der Berührungs-Sensoreinrichtungen (**7a, 7b**) an den Modellkörper während der Grob-Abtastung und der Fein-Abtastung kleiner als 30 pond, vorzugsweise kleiner als 5 pond, gewählt wird.

2. Verfahren nach Anspruch 1,
**dadurch gekennzeichnet,**
- dass zur Herstellung des Modellkörpers (**4**) ein lichthärtbares Material verwendet wird,
- dass in noch weichem Zustand des lichthärtbaren Materials die Kontur des Zahnes vorgeformt wird,
- dass nach der Aushärtung des lichthärtenden Materials der Modellkörper (**4**) eine gummiartige Konsistenz aufweist.

3. Verfahren nach Anspruch 1 oder 2,
**dadurch gekennzeichnet**,
- dass die Montagehöhe des Modellkörpers (**4**) so gewählt wird, dass kurz vor der des ersten Berührung eines Sensorkopfes (**20**) mit dem Modellkörper (**4**) das Bearbeitungswerkzeug (**30**) die Bearbeitung des Substratkörpers (**6**) beginnt.

4. Verfahren nach einem der vorangehenden Ansprüchen,
**dadurch gekennzeichnet**,
- dass in der Zustellphase die Zustellbahnen des Sensors (**7**) auf den Modellkörper (**4**) und die des Bearbeitungswerkzeugs (**30**) auf den Substratkörper (**6**) so gewählt werden, dass die Spitze des Sensors (**7**) und die Spitze des Bearbeitungswerkzeuges (**30**) vor der ersten Berührung des Modellkörpers (**4**) und des Substratkörpers (**6**) annähernd in den Rotationsachsen (**14, 15**) des Modellkörpers (**4**) und des Substratkörpers (**6**) liegen.

5. Verfahren nach einem der vorangehenden Ansprüchen,
**dadurch gekennzeichnet**,
- dass im Modellkörper (**4**) ein mit einem Griff (**4.2**) versehener Stützkörper (**4.1**) so eingebettet wird, dass der Griff (**4.2**) aus dem Modellkörper herausragt,
- dass der Modellkörper (**4**) zusammen mit dem Griff (**4.2**) vom Zahn entfernt wird,
- dass der Griff (**4.2**) vom Stützteil (**4.1**) lösbar beziehungsweise wiedereinsetzbar ausgestaltet ist.

6. Verfahren nach einem der Ansprüche 1-4,
**dadurch gekennzeichnet**,
- dass ein Abdruck von dem herzustellenden Zahnersatzteil genommen wird,
- dass mit Hilfe des Abdrucks der Modellhörper (**4**) hergestellt wird.

7. Einrichtung zur Herstellung eines Zahnersatzteiles, insbesondere in Form von Inlays, Onlays und Kronen, wobei aus einem Rohling in Form eines Substratkörpers (**6)** nach einem aus einem härtbaren Material hergestellten Modellkörper (**4**) das fertige Zahnnersatzteil mittels eines Bearbeitungswerkzeuges (**30**) mechanisch geformt wird,
- mit einem Modellkörper-Aufnahmeteil (**3**) zur Befestigung des Modellkörpers (**4**),
- mit einer Berührungs-Sensoreinheit (**7a**) zum Abtasten des Modellkörpers (**4**),
- mit einem Substratkörper-Aufnahmeteil (**5**) zur Befestigung des Substratkörpers (**6**), und
- mit einer Werkzeugeinheit (**30a**), welche zur Bearbeitung des Substratkörpers (**6**) vorgesehen ist, um aus dem Substratkörper (**6**) das der Form des Modellkörpers (**4**) entsprechende Zahnersatzteil herzustellen,
**dadurch gekennzeichnet**,
- dass die genannte Sensoreinheit (**7a**) zur Durchführung einer Grob-Abtastung und die genannte Werkzeugeinheit (**30a**) zur Durchführung einer Grob-Bearbeitung in Funktion der Grob-Abtastung ausgebildet sind,
- dass eine weitere, zur Durchführung einer Fein-Abtastung ausgebildete reibungsarme, hochpräzise Berührungs-Sensoreinheit (**7b**) und eine weitere, zur Durchführung einer FeinBearbeitung in Funktion der Fein-Abtastung ausgebildete Werkzeugeinheit (**30b**) angeordnet ist, wobei
- die beiden Werkzeugeinheiten (**30a, 30b**) das Bearbeitungswerkzeug (**30**) bilden und
- die Berührungs-Sensoreinheiten (**7a, 7b**) so ausgebildet sind, dass die von ihnen auf den Modellkörper (**4**) ausgeübten Anpresskräfte kleiner als 30 pond, vorzugsweise kleiner als 5 pond, sind.

8. Einrichtung nach Anspruch 7,
**dadurch gekennzeichnet**,
- dass die Sensoren mit den Bearbeitungswerkzeugen verbunden sind und jweils in einem festen Abstand von diesen angeordnet sind,
- dass gleichschnell drehende Rotationsachsen (**14**, **15**) vorgesehen sind, wobei auf der einen Rotationsachse (**14**) der Modellkörper (**4**) und auf der anderen Rotationsachse (**15**) der Substratkörper (**6**) angebracht ist.

9. Einrichtung nach Anspruch 7,
**dadurch gekennzeichnet**,
- dass ein mittels eines Antriebes (**41**) verschiebbarer Lineartisch (**13**) vorgesehen ist, an dem der erste und zweite Sensor (**7a,7b**), und eine erste, das erste Bearbeitungswerkzeug (**30a**) tragende Bearbeitungsvorrichtung (**8a**) und eine zweite, das zweite Bearbeitungswerkzeug (**30b**) tragende Bearbeitungsvorrichtung (**8b**) angeordnet sind,
- dass die Rotationsachsen (**14,15**) einer mittels eines Rotationsantriebes (**42**) antreibbaren Rotations-Synchronisationsvorrichtung (**10**) angehören, die auf einer zwischen einem ersten und einem zweiten Anschlag (**51,52**) verschiebbaren Verschiebevorrichtung (**11**) angeordnet ist,
- wobei in der durch den ersten Anschlag (**51**) bestimmten Position die Zentren eines ersten Sensorkopfes (**20a**) des ersten Sensors (**7a**) und des ersten Bearbeitungswerkzeuges (**30a**), und in der durch den zweiten Anschlag (**52**) bestimmten Position die Zentren eines zweiten Sensorkopfes (**20b**) des zweiten Sensors (**7b**) und des zweiten Bearbeitungswerkzeuges (**30b**) in der durch die Rotationsachsen (**14,15**) gebildeten Ebene liegen,
- dass eine mittels eines Hubantriebes (**43**) betätigbare Hubvorrichtung (**12**) vorgesehen ist, auf welcher die Verschiebevorrichtung (**11**) angeordnet ist, und
- dass eine elektronische Steuerschaltung vorgesehen ist, mittels welcher die Bewegung des Lineartisches (**13**), die Bewegung der Hubvorrichtung (**12**) und die Drehzahl der Rotations-Synchronisationsvorrichtung (**10**) in Abhängigkeit von der Form des Modellkörpers (**4**) und der Belastung des Bearbeitungswerkzeuges (**30a,30b**) steuerbar ist.

10. Einrichtung nach Patentanspruch 7,
**dadurch gekennzeichnet**, dass
- der Sensor (**7**) eine reibungsarme, in der Art eines Hallelementes arbeitende Wegmessvorrichtung (**24, 25**) aufweist.

11. Einrichtung nach Patentanspruch 7,
**dadurch gekennzeichnet**,
- dass die Rotationsachsen (**14, 15**) spielfrei und synchron drehbar sind.

12. Einrichtung nach Patentanspruch 7,
**dadurch gekennzeichnet**,
- dass der Sensorkopf (**20**) über den Bereich seiner Berührung mit dem Modellkörper (**4**) die gleiche Form wie das Bearbeitungswerkzeug (**30**) aufweist.

13. Einrichtung nach Patentanspruch 7,
**dadurch gekennzeichnet**,
- dass dem Sensor (**7**) eine elektronische Steuerung nachgeschaltet ist, die mittels der Signale des Sensors (**7**) die Bewegung der Abtastung des Modellkörpers (**4**) und der Bearbeitung des Substratkörpers (**6**) steuert.

14. Einrichtung nach Patentanspruch 7,
**dadurch gekennzeichnet**,
- dass die Bearbeitungsvorrichtung (**8**) beim Überschreiten einer vorgegebenen Belastungsschwelle ein Stoppen der Bearbeitung verursacht.

15. Einrichtung nach Patentanspruch 7,
**dadurch gekennzeichnet,**
- dass eine Anordnung vorgesehen ist, die den Herstellungsvorgang beim Überschreiten eines vorgegebenen Sensorsignales verlangsamt.

16. Einrichtung nach nach einem der Ansprüche 7 bis 15,
**dadurch gekennzeichnet**,
- dass an der einen Rotationsachse (**14**) ein Modellkörper-Aufnahmeteil (**3**) und an der anderen Rotationsachse (**15**) ein Substratkörper-Aufnahmeteil (**5**) vorgesehen ist, wobei der Modellkörper (**4**) mittels eines Haltestiftes (**3.1**) am Modellkörper-Aufnahmeteil (**3**) befestigt ist, und wobei der Substratkörper (**6**) mittels eines Substrathalters am Substratkörper-Aufnahmeteil (**5**) befestigt ist.

17. Einrichtung nach Anspruch 16,
**dadurch gekennzeichnet,**
dass der Modellkörper (**4**) am Haltestift (**3.1**) angeklebt ist.

18. Einrichtung nach Anspruch 17,
**dadurch gekennzeichnet**,
dass der Modellkörper (**4**) eine Bohrung aufweist, mittels welcher er auf dem Haltestift (**3.1**) geführt wird.

19. Einrichtung nach Anspruch 9,
**dadurch gekennzeichnet**,
dass das erste Bearbeitungswerkzeug (**30a**) eine relativ grosse Oberfläche bei kleiner Schnittbreite aufweist, und das zweite Bearbeitungswerkzeug (**30b**) entlang seiner Rotationsachse eine zugespitzte Form aufweist.

20. Einrichtung nach einem der Ansprüche 7 bis 19,
**dadurch gekennzeichnet**,
dass eine erste Justiervorrichtung (**53**) für die Justierung der Lage des ersten und zweiten Sensorkopfes (**20a,20b**) relativ zur Rotations-Synchronisationsvorrichtung (**10**) vorgesehen ist.

21. Einrichtung nach einem der Ansprüche 7 bis 20,
**dadurch gekennzeichnet**,
dass eine zweite Justiervorrichtung (**54**) für die Justierung des zweiten Bearbeitungswerkzeuges (**30b**) vorgesehen ist, wobei das zweite Bearbeitungswerkzeug (**30b**) auf der zweiten Justiervorrichtung (**54**) angebracht ist.

22. Einrichtung nach einem der Ansprüche 7 bis 21,
**dadurch gekennzeichnet**,
- dass der Sensor (**7**) einen Stator (**21**) und einen Kopfträger (**23**) aufweist, die beweglich miteinander verbunden sind,
- dass an der auf den Modellkörper (**4**) gerichteten Seite des Kopfträgers (**23**) ein Sensorkopf (**20**) angebracht ist, und
- dass am Stator (**21**) ein Hallelement (**24**) befestigt ist und am Kopfträger (**23**) ein Magnet (**25**) mittels einer Verschiebevorrichtung (**26**) befestigt ist, wobei Hallelement (**24**) und Magnet (**25**) eine Wegmessvorrichtung bilden.

23. Einrichtung nach einem der Ansprüche 10 bis 22,
**dadurch gekennzeichnet**,
dass der Stator (**21**) und der Kopfträger (**23**) mittels eines ersten und zweiten flexiblen Halters (**22a, 22b**) beweglich miteinander verbunden sind.

24. Einrichtung nach Anspruch 7,
**dadurch gekennzeichnet,**
- dass die Rotations-Synchronisationsvorrichtung (**10**) zwei Synchronisationsstangen (**71,72**) aufweist, die an beiden Enden mittels Lagerteilen (**73a, 73b,bzw. 74a,74b**) und in diese eingesetzte Teller (**75a, 75b, bzw. 76a,76b**) mit den Rotationsachsen (**14,15**) verbunden sind,
- dass die gemeinsamen Zentren der Lagerteile und Teller exzentrisch zu den Rotationsachsen (**14,15**) liegen,
- dass ein oberer Teller (**75a**) und ein unterer Teller (**76a**) zusammen mit der einen Rotationsachse (**15**), und ein anderer oberer Teller (**75b**) und ein anderer unterer Teller (**76b**) zusammen mit der anderen Rotationsachse (**14**) aus einem Stück bestehen,
- wobei das Zentrum des oberen Tellers (**75a**) zum Zentrum des unteren Tellers (**76a**) bezüglich der einen Rotationsachse (**15**) einen rechten Winkel bildet, und das Zentrum des anderen oberen Tellers (**75b**) zum Zentrum des anderen unteren Tellers (**76b**) bezüglich der anderen Rotationsachse (**14**) einen rechten Winkel bildet.

25. Einrichtung nach Anspruch 7,
**dadurch gekennzeichnet**,
- dass die Rotations-Synchronisationsvorrichtung (**10**) zwei obere und zwei untere Rotationsachsenteile (**15.1,15.2,** bzw. **14.1, 14.2**) aufweist, wobei die oberen Rotationsachsenteile (**15.1.14.1**) mit je einem oberen Teller (**75a,75b**), und die unteren Rotationsachsenteile (**15.2, 14.2**) mit je einem unteren Teller (**76a,76b**) fest verbunden sind,
- dass zwischen den oberen Tellern (**75a,75b**) und den unteren Tellern (**76a, 76b**) mittlere Teller (**77a,77b**) vorgesehen sind,
- dass die oberen, die unteren und die mittleren Teller jeweils zentrisch zu den Zentren der zugeordneten Rotationsachsenteile (**15.1,15.2,** bzw. **14.1,14.2**) liegen,
- dass die oberen Teller (**75a,75b**) mittels ersten Bolzen (**78a,78b**) mit den mittleren Tellern (**77a,77b**) verbunden sind, die mittels zweiten Bolzen (**79a,79b**) an den unteren Tellern (**76a,76b**) befestigt sind,
- dass die ersten und zweiten Bolzen exzentrisch zu den Rotationsachsenteilen angeordnet sind, wobei das Zentrum eines ersten Bolzens (**78a,78b**) an einem oberen Teller (**75a, 75b**) und das Zentrum eines zweiten Bolzens (**79a,79b**) an einem unteren Teller (**76a,76b**) bezüglich der zugeordneten Rotationsachsenteile (**15.1,15.2,** bzw. **14.1,14.2**) einen rechten Winkel bilden, und
- dass zwei Synchronisationsstangen (**71,72**) vorgesehen sind, wobei die eine Synchronisationsstange (**71**) über erste Lagerteile (**73a,73b**) an den ersten Bolzen (**78a,78b**), und die zweite Synchronisationsstange (**72**) über zweite Lagerteile (**74a,74b**) an den zweiten Bolzen (**79a,79b**) angelenkt sind.

26. Einrichtung nach Anspruch 7,
**dadurch gekennzeichnet**,
- dass ein Hallelement (**24**) des Sensors (**7**) ausgangsseitig mit einem Vorverstärker (**101**) verbunden ist, dem eine Signalregelstufe (**102**) und eine Sperrfilterstufe (**103**) nachgeschaltet ist, die ausgangsseitig an einer Koordinationselektronik (**104**) angeschlossen ist,
- dass ein Antrieb (**44**) der Bearbeitungsvorrichtung (**8**) mit einer Fräserabfrageelektronik (**105**) in Verbindung steht, die ausgangsseitig mit der Koordinationselektronik (**104**) verbunden ist,
- dass ein erster Ausgang (**121**) der Koordinationselektronik (**104**) an einer Linearsignalaufbereitung (**106**) angeschlossen ist, welcher eine Linear-Leistungstreiberstufe (**107**) nachgeschaltet ist, mittels welcher der Antrieb (**41**) für den Lineartisch (**13**) angesteuert werden kann,
- dass ein zweiter Ausgang (**122**) der Koordinationselektronik (**104**) mit einer Rotationsregelstufe (**108**) verbunden ist, welcher eine Rotationstreiberstufe (**109**) nachgeschaltet ist, die mit dem Rotationsantrieb (**42**) in Verbindung steht, und
- dass der zweite Ausgang (**122**) an einer Hubregelstufe (**110**) angeschlossen ist, welcher eine mit dem Hubantrieb (**43**) verbundene Hubtreiberstufe (**111**) nachgeschaltet ist.

27. Einrichtung nach Anspruch 26,
**dadurch gekennzeichnet**,
dass die Filterstufen der Sperrfilterstufe (**103**) als Sperrfilter (Notch-Filter) aufgebaut sind, die einen engen Notch aufweisen, dessen Mittenfrequenz gleich der Frequenz, bzw. deren Vielfachen, der Drehzahl der Bearbeitungsvorrichtung (**8a,8b**) ist.

28. Einrichtung nach Anspruch 27,
**dadurch gekennzeichnet**,
- dass die Koordinationseiektronik (**104**) einen oberen und einen unteren Spannungswert erzeugt,
- dass bei Ueber- oder Unterschreiten des oberen oder unteren Spannungswertes durch die der Auslenkung des Sensors (**7a,7b**) proportionalen Sensorsignalspannung, von der Koordinationselektronik (**104**) ein weiteres Signal erzeugt wird, und
- dass bei Auftreten des weiteren Sinals am zweiten Ausgang (**122**) die Geschwindigkeiten des Rotationsantriebes (**42**) und des Hubantriebes (**43**) solange verändert werden, bis die Sensorsignalspannung innerhalb des oberen und unteren Spannungswertes liegt.

29. Einrichtung nach Anspruch 28,
**dadurch gekennzeichnet**,
dass die Fräserabfrageelektronik (**105**) ein Zwischensignal erzeugt, das proportional zum Differential der Leistungsaufnahme der Bearbeitungsvorrichtung (**8a,8b**) ist, und dass die Fräserelektronik (**105**) ein weiteres Signal erzeugt und an die Koordinationselektronik (**104**) abgibt, wenn das Zwischensignal einen Schwellwert überschreitet, wobei das weitere Signal bewirkt, dass die Linear-, die Rotations- und die Hubbewegung verlangsamt werden, bis die Leistungsaufnahme innerhalb eines erlaubten Bereiches liegen.

## Claims

1. Method for producing a tooth replacement part for a tooth, in particular in the form of inlays, onlays and crowns, in which method
- a hardenable material is used to produce a model,
- the contour of the tooth is preformed on the model,
- the model (4) is produced,
- the model is removed from its production site after the material has hardened,
- the model is scanned by means of a contact sensor unit (7a), and
- the scanning movements are transmitted to a machining tool unit (30a) which, from a blank in the form of a substrate (6), forms a finished tooth replacement part corresponding in shape to the model (4),
characterized in that
- the said scanning movements are rough scanning movements and the said machining is a rough machining, and
- following the rough scanning and the rough machining, a fine scanning of the model (4) is carried out by a second, high-precision and low-friction contact sensor unit (7b), and a fine machining of the substrate (6) is carried out by means of a second tool unit (30b), where
- the average pressure force of the contact sensor devices (7a, 7b) an the model during the rough scanning and the fine scanning is chosen to be less than 30 pond, preferably less than 5 pond.

2. Method according to Claim 1, characterized in that
- a light-hardenable material is used to produce the model (4),
- with the light-hardenable material still in the soft state, the contour of the tooth is preformed,
- after the light-hardening material has fully set, the model (4) has a rubbery consistency.

3. Method according to Claim 1 or 2, characterized in that
- the mounting height of the model (4) is chosen such that the machining tool (30) begins machining the substrate (6) shortly before the first contact of a sensor head (20) with the model (4).

4. Method according to one of the preceding claims, characterized in that
- in the advance phase, the advance trajectories of the sensor (7) towards the model (4) and those of the machining tool (30) towards the substrate (6) are chosen such that the tip of the sensor (7) and the tip of the machining tool (30), prior to the first contact of the model (4) and the substrate (6), lie approximately in the rotational axes (14, 15) of the model (4) and of the substrate (6).

5. Method according to one of the preceding claims, characterized in that
- a support (4.1) provided with a grip (4.2) is embedded in the model (4) in such a way that the grip (4.2) protrudes from the model,
- the model (4) is removed from the tooth together with the grip (4.2),
- the grip (4.2) is designed so that it can be detached from the support part (4.1) and fitted back on again.

6. Method according to one of Claims 1 - 4, characterized in that
- an impression is made of the tooth replacement part which is to be produced,
- the model (4) is produced with the aid of the impression.

7. Device for producing a tooth replacement part, in particular in the form of inlays, onlays and crowns, the finished tooth replacement part being mechanically shaped by means of a machining tool (30) from a black in the form of a substrate (6) according to a model (4) produced from a hardenable material,
- with a model-receiving part (3) for securing the model (4),
- with a contact sensor unit (7a) for scanning the model (4),
- with a substrate-receiving part (5) for securing the substrate (6), and
- with a tool unit (30a) which is provided for machining the substrate (6) in order to produce, from the substrate (6), the tooth replacement part corresponding to the shape of the model (4),
characterized in that
- the said sensor unit (7a) is designed for carrying out a rough scanning and the said tool unit (30a) is designed for carrying out a rough machining as a function of the rough scanning,
- a further low-friction, high-precision contact sensor unit (7b) designed for carrying out a fine scanning, and a further tool unit (30b) designed for carrying out a fine machining as a function of the fine scanning, are provided, where
- the two tool units (30a, 30b) form the machining tool (30), and
- the contact sensor units (7a, 7b) are designed such that the pressure forces exerted by them on the model (4) are less than 30 pond, preferably less than 5 pond.

8. Device according to Claim 7, characterized in that
- the sensors are connected to the machining tools and are in each case arranged at a fixed distance from these,
- rotational axles (14, 15) rotating at the same speed are provided, the model (4) being arranged on one rotational axle (14) and the substrate (6) being arranged on the other rotational axle (15).

9. Device according to claim 7, characterized in that
- a linear platform (13) which can be displaced by a drive mechanism (41) is provided, on which the first and second sensors (7a, 7b), and a first machining device (8a) carrying the first machining tool (30a), and a second machining device (8b) carrying the second machining tool (30b), are arranged
- the rotational axles (14, 15) belong to a rotation-synchronizing device (10) which can be driven by means of a rotary drive mechanism (42) and which is arranged on a displacement device (11) which can be displaced between a first and a second limit stop (51, 52),
- in the position defined by the first limit stop (51), the centres of a first sensor head (20a) of the first sensor (7a) and of the first machining tool (30a) lying in the plane formed by the rotational axles (14, 15), and in the position defined by the second limit stop (52) the centres of a second sensor head (20b) of the second sensor (7b) and of the second machining tool (30b) lying in the plane formed by the rotational axles (14, 15),
- a lifting device (12) which can be actuated by means of a lifting drive mechanism (43) is provided, on which the displacement device (11) is arranged, and
- an electronic control circuit is provided by means of which the movement of the linear platform (13), the movement of the lifting device (12) and the speed of rotation of the rotation-synchronizing device (10) can be controlled as a function of the shape of the model (4) and the load on the machining tool (30a, 30b).

10. Device according to Patent Claim 7, characterized in that
- the sensor (7) has a low-friction displacement-measuring device (24, 25) functioning in the manner of a Hall element.

11. Device according to Patent Claim 7, characterized in that
- the rotational axles (14, 15) can rotate free of play and synchronously.

12. Device according to Patent Claim 7, characterized in that
- the sensor head (20), over its range of contact with the model (4), has the same shape as the machining tool (30).

13. Device according to Patent Claim 7, characterized in that
- an electronic control arrangement is connected downstream of the sensor (7), which control arrangement, by means of the signals from the sensor (7), controls the movement of the scanning of the model (4) and the machining of the substrate (6).

14. Device according to Patent Claim 7, characterized in that
- the machining device (8) causes the machining to stop when a predetermined load threshold is exceeded.

15. Device according to Patent Claim 7, characterized in that
- an arrangement is provided which slows down the production process when a predetermined sensor signal is exceeded.

16. Device according to one of Claims 7 to 15, characterized in that
- a model-receiving part (3) is provided on one rotational axle (14), and a substrate-receiving part (5) is provided on the other rotational axle (15), the model (4) being secured on the model-receiving part (3) by means of a retention pin (3.1), and the substrate (6) being secured on the substrate-receiving part (5) by means of a substrate holder.

17. Device according to Claim 16, characterized in that the model (4) is bonded on the retention pin (3.1).

18. Device according to Claim 17, characterized in that the model (4) has a bore by means of which it is guided on the retention pin (3.1).

19. Device according to Claim 9, characterized in that the first machining tool (30a) has a relatively large surface and a small cutting width, and the second machining tool (30b) has a shape tapering along its rotational axle.

20. Device according to one of Claims 7 to 19, characterized in that a first adjusting device (53) is provided for adjusting the position of the first and second sensor heads (20a, 20b) relative to the rotation-synchronizing device (10).

21. Device according to one of Claims 7 to 20, characterized in that a second adjusting device (54) is provided for adjusting the second machining tool (30b), the said second machining tool (30b) being arranged on the second adjusting device (54).

22. Device according to one of Claims 7 to 21, characterized in that
- the sensor (7) has a stator (21) and a head piece (23) which are connected movably to one another,
- a sensor head (20) is arranged on that side of the head piece (23) facing the model (4), and
- a Hall element (24) is secured on the stator (21), and a magnet (25) is secured on the head piece (23) by means of a displacement device (26), with the Hall element (24) and magnet (25) forming a displacement-measuring device.

23. Device according to one of Claims 10 to 22, characterized in that the stator (21) and the head piece (23) are connected movably to one another by means of a first and a second flexible holder (22a, 22b).

24. Device according to Claim 7, characterized in that
- the rotation-synchronizing device (10) has two synchronization rode (71, 72) which are connected at both ends by means of bearing parts (73a, 73b and 74a, 74b), and plates (75a, 75b and 76a, 76b) fitted in these are connected to the rotational axles (14, 15),
- the common centres of the bearing parts and plates lie eccentrically in relation to the rotational axles (14, 15),
- an upper plate (75a) and a lower plate (76a) together with one rotational axle (15), and another upper plate (75b) and another lower plate (76b) together with the other rotational axle (14), consist of one piece,
- the centre of the upper plate (75a) forming a right angle to the centre of the lower plate (76a) in relation to one rotational axle (15), and the centre of the other upper plate (75b) forming a right angle to the centre of the other lower plate (76b) in relation to the other rotational axle (14).

25. Device according to Claim 7, characterized in that
the rotation-synchronizing device (10) has two upper and two lower rotational axle parts (15.1, 15.2 and 14.1, 14.2), the upper rotational axle parts (15.1, 14.1) each being firmly connected to an upper plate (75a, 75b), and the lower rotational axle parts (15.2, 14.2) each being firmly connected to a lower plate (76a, 76b),
- middle plates (77a, 77b) are provided between the upper plates (75a, 75b) and the lower plates (76a, 76b),
- the upper, lower and middle plates each lie centrally with respect to the centres of the associated rotational axle parts (15.1, 15.2 and 14.1, 14.2),
- the upper plates (75a, 75b) are connected by means of first bolts (78a, 78b) to the middle plates (77a, 77b), which are secured by means of second bolts (79a, 79b) on the lower plates (76a, 76b),
- the first and second bolts are arranged eccentrically with respect to the rotational axle parts, the centre of a first bolt (78a, 78b) on an upper plate (75a, 75b) and the centre of a second bolt (79a, 79b) on a lower plate (76a, 76b) forming a right angle with respect to the associated rotational axle parts (15.1, 15.2 and 14.1, 14.2), and
- two synchronization rods (71, 72) are provided, the one synchronization rod (71) being articulated via first bearing parts (73a, 73b) on the first bolt (78a, 78b), and the second synchronization rod (72) being articulated via second bearing parts (74a, 74b) on the second bolts (79a, 79b).

26. Device according to Claim 7, characterized in that
- a Hall element (24) of the sensor (7) is connected on the output side to a pre-amplifier (101), to which there are connected downstream a signal control stage (102) and a stop filter stage (103), which is connected on the output side to coordinating electronics (104),
- a drive mechanism (44) of the machining device (8) communicates with miller interrogation electronics (105) which are connected on the output side to the coordinating electronics (104),
- a first output (121) of the coordinating electronics (104) is connected to a linear signal preparer (106) to which a linear power stage (107) is connected downstream, by means of which the drive mechanism (41) for the linear platform (13) can be triggered
- a second output (122) of the coordinating electronics (104) is connected to a rotation control stage (108) to which a rotation driver stage (109) is connected downstream, which communicates with the rotational drive mechanism (42), and
- the second output (122) is connected to a lift control stage (110) to which a lift driver stage (111) linked to the lift drive mechanism (43) is connected downstream.

27. Device according to Claim 26, characterized in that the filter stages of the stop filter stage (103) are constructed as stop filters (notch filters) which have a narrow notch whose centre frequency is equal to the frequency, or multiples thereof, of the speed of rotation of the machining device (8a, 8b).

28. Device according to Claim 27, characterized in that
- the coordinating electronics (104) generate an upper and a lower voltage value,
- when the sensor signal voltage proportional to the deflection of the sensor (7a, 7b) exceeds or drops below the upper/lower voltage value, a further signal is generated by the coordinating electronics (104), and
- when the further signal occurs at the second output (122), the speeds of the rotational drive mechanism (42) and of the lifting drive mechanism (43) are altered until the sensor signal voltage lies within the upper and lower voltage value.

29. Device according to Claim 28, characterized in that the miller interrogation electronics (105) generate an intermediate signal which is proportional to the differential of the power consumption of the machining device (8a, 8b), and in that the milling electronics (105) generate a further signal and send this to the coordinating electronics (104) when the intermediate signal exceeds a threshold value, the further signal having the effect of slowing down the linear, rotational and lifting movements until the power consumption lies within a permitted range.

## Revendications

1. Procédé pour fabriquer une prothèse dentaire pour une dent, notamment du type inlays, onlays et couronnes, selon lequel
- on utilise un matériau durcissable pour fabriquer un corps modèle,
- on réalise un moulage préalable du contour de la dent sur le corps formant modèle,
- on fabrique le corps formant modèle (4),
- on retire de son emplacement de fabrication le corps formant modèle après durcissement du matériau,
- on explore le corps formant modèle au moyen d'une unité formant détecteur de contact (7a), et
- on transmet les déplacements d'exploration à une unité formant outil de traitement (30a), qui, à partir d'une ébauche possédant la forme d'un corps formant substrat (6), réalise une prothèse dentaire terminée, dont la forme correspond au corps formant modèle (4),
caractérisé en ce
- que les déplacements d'exploration indiqués sont des déplacements d'exploration approximatifs et que ledit usinage est un usinage approximatif, et
- qu'à la suite de l'exploration approximative et de l'usinage approximatif, une exploration précise du corps formant modèle (4) est exécutée au moyen d'une seconde unité formant capteur de contact (7b) très précise et présentant peu de frottement, et un usinage précis du corps formant substrat (6) est exécuté à l'aide d'une seconde unite formant outil (30b),
- la force moyenne de serrage des dispositifs formant détecteurs de contact (7a, 7b) entre le corps formant modèle pendant l'exploration approximative et pendant l'exploration précise est choisie inférieure à 30 grammes-forces, de préférence inférieure à 5 grammes-forces.

2. Procédé selon la revendication 1, caractérisé en ce
- que pour la fabrication du corps formant modèle (4), on utilise un matériau durcissable sous l'action de la lumière,
- que lorsque le matériau durcissable sous l'action de la lumière est encore à l'état mou, le contour de la dent est préformé,
- qu'après le durcissement du matériau durcissable sous l'action de la lumière, le corps formant modèle (4) possède une consistance analogue au caoutchouc.

3. Procédé selon la revendication 1 ou 2, caractérisé en ce
- que la hauteur de montage du corps formant modèle (4) est choisie de telle sorte que peu avant le premier contact d'une tête de détection (20) avec le corps formant modèle (4), l'outil d'usinage (30) commence l'usinage du corps formant substrat (6).

4. Procédé selon l'une des revendications précédentes, caractérisé en ce
- que dans la phase d'approche, les voies d'approche du détecteur (7) sur le corps formant modèle (4) et les voies d'approche de l'outil d'usinage (30) sur le corps formant substrat (6) sont choisies de telle sorte que la pointe du détecteur (7) et la pointe de l'outil d'usinage (30) sont situées approximativement sur les axes de rotation (14, 15) du corps formant modèle (4) et du corps formant substrat (6), avant le premier contact du corps formant modèle (4) et du corps formant substrat (6).

5. Procédé selon l'une des revendications précédentes, caractérisé en ce
- qu'on encastre dans le corps formant modèle (4) un corps de support (4.1) qui est pourvu d'une poignée (4.2) de sorte que la poignée (4.2) ressort du corps formant modèle,
- qu'on retire le corps formant modèle (4) conjointement avec la poignée (4.2) à partir de la dent,
- que la poignée (4.2) est agencée de manière à pouvoir être retirée de la partie de support (4.1) et de manière à pouvoir y être réinsérée.

6. Procédé selon l'une des revendications 1-4, caractérisé en ce
- qu'on réalise une empreinte de la prothèse dentaire devant être fabriquée,
- qu'on fabrique le corps formant modèle (4) à l'aide de l'empreinte.

7. Dispositif pour fabriquer une prothèse dentaire, notamment sous la forme d'inlays, d'onlays et de couronnes, dans lequel on forme mécaniquement à partir d'une ébauche ayant la forme d'un corps formant substrat (6), sur la base d'un corps formant modèle (4) fabriqué en un matériau durcissable, la prothèse dentaire terminée à l'aide d'un outil d'usinage (30), comportant
- une pièce (3) de logement du corps formant modèle, pour fixer le cors formant modèle (4),
- une unité formant détecteur de contact (7a) pour explorer le corps formant modèle (4),
- une pièce (5) de logement du corps formant substrat servant à fixer le corps formant substrat (6), et
- une unité formant outil (30a), qui est prévue pour l'usinage du corps de substrat (6), pour fabriquer, partir du corps formant substrat (6), la prothèse dentaire qui correspond à la forme du corps formant modèle (4),
caractérisé en ce qu'il est prévu
- que ladite unité de détection (7a) pour la mise en oeuvre d'une exploration approximative et ladite unité formant outil (30a) pour l'exécution d'un usinage approximatif sont agencées en fonction de l'exploration approximative,
- qu'une autre unité de détection à contact (7b) très précise et présentant peu de frottement, qui est conçue pour la mise en oeuvre d'une exploration précise, et une autre unité formant outil (30b), agencée pour l'exécution d'un usinage précis en fonction de l'exploration précise,
- les deux unités formant outils (30a, 30b) formant l'outil d'usinage (3), et
- les unités formant détecteurs de contact (7a, 7b) étant agencées de telle sorte que les forces de serrage, qu'elles appliquent au corps formant modèle (4), sont inférieures à 30 grammes-forces et de préférence à 5 grammes-forces.

8. Dispositif selon la revendication 7, caractérisé en ce
- que les détecteurs sont reliés aux outils d'usinage et sont disposés respectivement à une distance fixe de ces derniers, et
- que des axes de rotation (14, 15) tournant à la même vitesse sont prévus, le corps fermant modèle (4) étant disposés sur un axe de rotation (14), tandis que le corps formant substrat (6) est disposé sur l'autre axe de rotation (15).

9. Dispositif selon la revendication 7, caractérisé en ce
- qu'il est prévu une table linéaire (13), qui est translatable à l'aide d'un dispositif d'entraînement (41), et sur laquelle sont montés les premier et second détecteurs (7a, 7b) et un premier dispositif d'usinage (8a), qui porte le premier outil d'usinage (30a), et un second dispositif d'usinage (8b), qui porte le second outil d'usinage (30b),
- que les axes de rotation (14, 15) font partie d'un dispositif de synchronisation de rotation (10), qui peut être entraînés au moyen d'un dispositif d'entraînement en rotation (42), et qui est disposé sur un dispositif de translation (11) qui est translatable entre des première et seconde butées (51, 52),
- dans lequel dans la position déterminée par la première butée (51), les centres d'une première tête (20a) du premier détecteur (7a) et du premier outil d'usinage (30a) et, dans la position déterminée par la seconde butée (52), les centres d'une deuxième tête (20b) du second détecteur (7b) et du deuxième outil d'usinage (30b) sont situés dans le plan formé par les axes de rotation (14, 15),
- qu'il est prévu un dispositif de levage (12), qui peut être actionné à l'aide d'un dispositif d'entraînement (43) sur lequel est disposé le dispositif de translation (11), et
- qu'il est prévu un circuit de commande électronique, à l'aide duquel le déplacement de la table linéaire (13), le déplacement du dispositif de levage (12) et la vitesse de rotation du dispositif de synchronisation de rotation (10) peuvent être commandés en fonction de la forme du corps formant modèle (4) et de la charge de l'outil d'usinage (30a, 30b).

10. Dispositif selon la revendication 7, caractérisé en ce que
- le détecteur (7) comporte un dispositif de mesure de distance (24, 25) qui présente peu de frottement et travaille à la manière d'un élément de Hall.

11. Dispositif selon la revendication 7, caractérisé en ce
- que les axes de rotation (14, 15) peuvent tourner sans jeu et d'une manière synchrone.

12. Dispositif selon la revendication 7, caractérisé en ce
- que la tête (20) du détecteur possède, dans la zone de son contact avec le corps format modèle (4), la même forme que l'outil d'usinage (30).

13. Dispositif selon la revendication 7, caractérisé en ce
- qu'en aval du capteur (7) est branchée une unité de commande électronique, qui, à l'aide des signaux du détecteur (7), commande le déplacement d'exploration du corps formant modèle (4) et l'usinage du corps formant substrat (6).

14. Dispositif selon la revendication 7, caractérisé en ce
- que lors du dépassement d'un seuil de charge prédéterminé, le dispositif d'usinage (8) provoque un arrêt de l'usinage.

15. Dispositif selon la revendication 7, caractérisé en ce
- qu'il est prévu un dispositif qui ralentit le processus de fabrication lors du dépassement d'un signal prédéterminé du détecteur.

16. Dispositif selon l'une des revendications 7 à 15, caractérisé en ce
- qu'une partie (3) de réception du corps formant modèle est prévue sur un axe de rotation (14) et qu'une partie (5) de logement du corps formant substrat est prévue sur l'autre axe de rotation (15), le corps modèle (4) étant fixé à l'aide d'une tige de retenue (3.1) sur la partie (3) de réception du corps formant modèle, et le corps formant substrat (6) étant fixé sur la partie (5) de réception du corps formant substrat à l'aide d'un porte-substrat.

17. Dispositif selon la revendication 16, caractérisé en ce que le modèle formant modèle (4) est collé sur la tige de retenue (3.1).

18. Dispositif selon la revendication 17, caractérisé en ce que le corps formant modèle (4) possède un perçage, au moyen duquel il est guidé sur la tige de retenue (3.1).

19. Dispositif selon la revendication 9, caractérisé en ce que le premier outil d'usinage (30a) possède une surface relativement étendue pour une faible largeur de coupe et que le second outil d'usinage (30b) possède le long de son axe de rotation, une forme pointue.

20. Dispositif selon l'une des revendications 7 à 19, caractérisé en ce qu'il est prévu un premier dispositif d'ajustement (53) pour ajuster la position des première et seconde têtes (20a, 20b) des détecteurs par rapport au dispositif de synchronisation de rotation (10).

21. Dispositif selon l'une des revendications 7 à 20, caractérisé en ce qu'il est prévu un second dispositif d'ajustement (54) pour ajuster le second outil d'usinage (30b), le second outil d'usinage (30b) étant disposé sur le second dispositif d'ajustement (54).

22. Dispositif selon l'une des revendications 7 à 21, caractérisé en ce
- que le détecteur (16) comporte un stator (21) et un porte-tête (23), qui sont reliés entre eux de manière à être déplaçables,
- qu'une tête (20) de détecteur est disposé sur le côté, tourné vers le corps formant modèle (4), du porte-tête (23), et
- que l'élément de Hall (24) est fixé sur le stator (21) et qu'un aimant (25) est fixé sur le porte-tête (23) à l'aide d'un dispositif de translation (26), l'élément de Hall (24) et l'aimant (25) formant un dispositif de mesure de distance.

23. Dispositif selon l'une des revendications 10 à 22, caractérisé en ce que le stator (21) et le porte-tête (23) sont reliés entre eux de manière à être déplaçables à l'aide de premier et second supports flexibles (22a, 22b).

24. Dispositif selon la revendication 7, caractérisé en ce
- que le dispositif de synchronisation de rotation (10) comporte deux barres de synchronisation (71, 72) qui sont reliées aux axes de rotation (14, 15), au niveau des deux extrémités, à l'aide d'éléments de paliers (73a, 73b ou 74a, 74b) et de disques (75a, 75b ou 76a, 76b) insérés dans ces éléments de paliers,
- que les centres communs des éléments de paliers et des disques sont disposés d'une manière excentrée par rapport aux axes de rotation (14, 15),
- qu'un disque supérieur (75a) et un disque inférieur (76a) associés à un axe de rotation (15) et un autre disque supérieur (75b) et un autre disque inférieur (76b) associés à un autre axe de rotation (14) sont réalisés d'un seul tenant,
- le centre du disque supérieur (75a) faisant par rapport au centre du disque inférieur (76a) un angle droit par rapport à un axe de rotation (15), et le centre de l'autre disque supérieur (75b) formant par rapport au centre de l'autre disque inférieur (76b), par rapport à l'autre axe de rotation (14) un angle droit.

25. Dispositif selon la revendication 7, caractérisé en ce
- que le dispositif de synchronisation de rotation (10) comporte deux éléments supérieurs d'axe de rotation et deux éléments inférieurs d'axe de rotation (15.1, 15.2 ou 14.1, 14.2), les deux éléments supérieurs d'axe de rotation (15.1, 14.1) étant reliés fermement à un disque supérieur respectif (75a, 75b), et les éléments inférieurs d'axe de rotation (15.2, 14.2) étant reliés de façon fixe à un disque inférieur respectif (76a, 76b),
- que des disques médians (77a, 77b) sont prévus entre les disques supérieurs (75a, 75b) et les disques inférieurs (76a, 76b),
- que les disques supérieurs, les disques inférieurs et les disques médians sont disposés respectivement d'une manière centrée par rapport aux centres des éléments associés d'axe de rotation (15.1, 15.2 ou 14.1, 14.2),
- que les disques supérieurs (75a, 75b) sont reliés au moyen d'un boulon (78a, 78b) aux disques médians (77a, 77b), qui sont fixés aux disques inférieurs (76a, 76b) à l'aide de deux boulons (79a, 79b),
- que les premier et second boulons sont disposés de façon excentrée par rapport aux éléments d'axes de rotation, le centre d'un premier boulon (78a, 78b) sur un disque supérieur (75a, 75b) et le centre d'un second boulon (79a, 79b) sur un disque inférieur (76a, 76b) faisant un angle droit par rapport aux éléments associés d'axes de rotation (15.1, 15.2 ou 14.1, 14.2), et
- qu'il est prévu deux types de synchronisation (71, 72), une tige de synchronisation (71) étant articulée par l'intermédiaire de premiers éléments de paliers (73a, 73b) sur le premier boulon (78a, 78b) et la seconde tige de synchronisation (72) étant articulée par l'intermédiaire de seconds éléments de paliers (74a, 74b) au second boulon (79a, 79b).

26. Dispositif selon la revendication 7, caractérisé en ce
- qu'un élément de Hall (24) du détecteur (7) est relié côté sortie à un préamplificateur (101, en aval duquel sont montés un étage (102) de régulation (de régulation des signaux) et un étage formant filtre de blocage (130), qui est raccordé côté sortie à un système électronique de coordination (104),
- qu'un dispositif d'entraînement (44) du dispositif d'usinage (8) est relié à une unité électronique (105) d'interrogation d'une fraiseuse, qui est reliée côté sortie à l'unité électronique de coordination (104),
- qu'une première sortie (121) de l'unité électronique de coordination (104) est connectée à une unité (106) de préparation de déplacement linéaire, en aval de laquelle est branché un étage d'attaque de puissance de déplacement linéaire (107), au moyen duquel le dispositif d'entraînement (41) pour la table de déplacement linéaire (13) peut être commandé,
- qu'une seconde sortie (122) de l'unité électronique de coordination (104) est reliée à un étage de régulation de rotation (104), en aval duquel est branché un étage d'attaque de rotation (109), qui est relié au dispositif d'entraînement en rotation (42), et
- que la seconde sortie (122) est raccordée à un étage de régulation de la variation (110) en aval duquel est branché un étage d'attaque de levage (111) relié au dispositif d'entraînement de levage (43).

27. Dispositif selon la revendication 26, caractérisé en ce que les étages de filtres de l'étage à filtres de blocage (103) sont agencés sous la forme de filtres de blocage (filtres à encoches), qui possèdent une encoche étroite, dont la fréquence centrale est égale à la fréquence ou à un multiple de la vitesse de rotation du dispositif d'usinage (8a, 8b).

28. Dispositif selon la revendication 27, caractérisé en ce que
- que l'unité électronique de coordination (104) produit une valeur de tension supérieure et une valeur de tension inférieure,
- que lors du dépassement par valeurs supérieures ou par valeurs inférieures de la valeur de tension supérieure ou inférieure par la tension de signal du détecteur, qui est proportionnelle à la déviation du détecteur (7a, 7b), l'unité électronique de coordination (104) produit un autre signal, et
- que lors de l'apparition de l'autre signal sur la seconde sortie (122), les vitesses du dispositif d'entraînement de rotation (42) et du dispositif d'entraînement de levage (43) sont modifiées jusqu'à ce que la tension du signal du détecteur soit située entre les valeurs de tension supérieure et inférieure.

29. Dispositif selon la revendication 28, caractérisé en ce que l'unité électronique (105) d'interrogation de la fraiseuse produit un signal intermédiaire, qui est proportionnel à la différentielle de la puissance absorbée du dispositif d'usinage (8a, 8b), et que l'unité électronique (105) de la fraiseuse produit un autre signal et l'envoie à l'unité électronique de coordination (104), lorsque le signal intermédiaire dépasse une valeur de seuil par valeurs supérieures, l'autre signal agissant de telle sorte que le déplacement linéaire, le déplacement de rotation et le déplacement de levage sont ralentis jusqu'à ce que la puissance absorbée se situe à l'intérieur d'une plage admissible de valeurs.
